# EUROPEAN PATENT SPECIFICATION

(11) **EP 4 360 374 B1**
(45) Date of publication and mention of the grant of the patent: **14.01.2026**
(21) Application number: 22744511.1
(22) Date of filing: 20.06.2022
(51) Int. Cl.: H04W 64/00, H04W 88/18

(54) **METHODS AND DEVICES FOR DEFINING AND SIGNALING PRE-CONFIGURED POSITIONING REFERENCE SIGNALS (PRS)**
VERFAHREN UND VORRICHTUNGEN ZUR DEFINITION UND SIGNALISIERUNG VON VORKONFIGURIERTEN POSITIONIERUNGSREFERENZSIGNALEN (PRS)
PROCÉDÉS DE DÉFINITION ET DE SIGNALISATION DE SIGNAUX DE RÉFÉRENCE DE POSITIONNEMENT (PRS) PRÉ-CONFIGURÉS

(30) Priority: 22.06.2021 US 202163213665 P
(43) Date of publication of application: 01.05.2024
(73) Proprietor: Telefonaktiebolaget LM Ericsson (publ), 164 83 Stockholm (SE)
(72) Inventor: SHREEVASTAV, Ritesh, SE-194 47 Upplands Väsby (SE); LYAZIDI, Yazid, SE1 5ZW London (GB); MURUGANATHAN, Siva, Stittsville, Ontario K2S 0R3 (CA); LINDMARK, Gustav, 583 31 Linköping (SE)
(74) Representative: Ericsson
(86) International application number: PCT/IB2022/055717
(87) International publication number: WO 2022/269467

(56) References cited:
- WO-A1-2020/026211
- US-A1- 2020 107 286
- US-A1- 2020 154 240
- QUALCOMM INCORPORATED: "On-Demand DL-PRS", vol. RAN WG2, no. Electronic; 20210519 - 20210527, 11 May 2021 (2021-05-11), XP052007454, Retrieved from the Internet <URL:https://ftp.3gpp.org/tsg_ran/WG2_RL2/TSGR2_114-e/Docs/R2-2106084.zip R2-2106084_(On-demand PRS).docx> [retrieved on 20210511]
- OPPO: "Discussion on on-demand DL-PRS", vol. RAN WG2, no. electronic; 20210501, 11 May 2021 (2021-05-11), XP052006973, Retrieved from the Internet <URL:https://ftp.3gpp.org/tsg_ran/WG2_RL2/TSGR2_114-e/Docs/R2-2105338.zip R2-2105338- Discussion on on-demand DL-PRS.doc> [retrieved on 20210511]
- INTERDIGITAL INC: "Discussion on Enhancements for Latency Reduction", vol. RAN WG2, no. Electronic; 20210519 - 20210527, 10 May 2021 (2021-05-10), XP052003817, Retrieved from the Internet <URL:https://ftp.3gpp.org/tsg_ran/WG2_RL2/TSGR2_114-e/Docs/R2-2105302.zip R2-2105302 (R17 NR POS WI_AI8112_Latency).doc> [retrieved on 20210510]

## Description

### TECHNICAL FIELD

The present disclosure relates generally to wireless communication networks, and more specifically to network transmission of positioning reference signals (PRS) that can be used to determine the geographic location of a user equipment (UE).

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

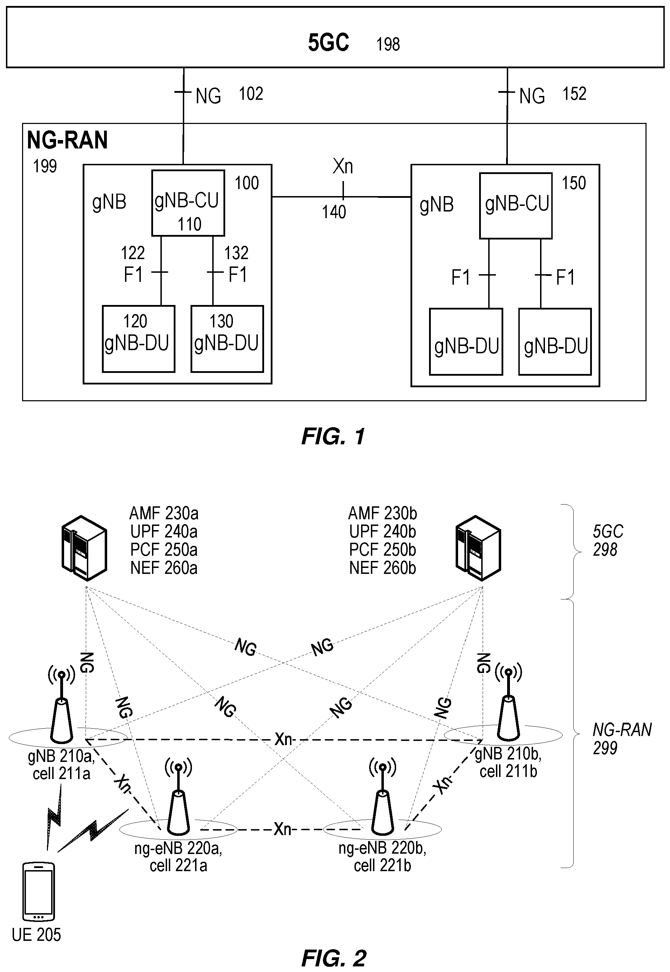

Figure 1 illustrates an exemplary high-level view of the 5G network architecture, consisting of a Next Generation RAN (NG-RAN) 199 and a 5G Core (5GC) 198. NG-RAN 199 can include a set of gNodeB's (gNBs) connected to the 5GC via one or more NG interfaces, such as gNBs 100, 150 connected via interfaces 102, 152, respectively. In addition, the gNBs can be connected to each other via one or more Xn interfaces, such as Xn interface 140 between gNBs 100 and 150. With respect the NR interface to UEs, each of the gNBs can support frequency division duplexing (FDD), time division duplexing (TDD), or a combination thereof.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG RAN logical nodes shown in Figure 1 include a central (or centralized) unit (CU or gNB-CU) and one or more distributed (or decentralized) units (DU or gNB-DU). For example, gNB 100 includes gNB-CU 110 and gNB-DUs 120 and 130. CUs are logical nodes that host higher-layer protocols and perform various gNB functions such controlling the operation of DUs, which are logical nodes that host lower-layer protocols and can include various subsets of the gNB functions. As such, each of the CUs and DUs can include various circuitry needed to perform their respective functions, including processing circuitry, transceiver circuitry (*e.g.,* for communication), and power supply circuitry.

A gNB-CU connects to gNB-DUs over respective F1 logical interfaces, such as interfaces 122 and 132 shown in Figure 1. The gNB-CU and connected gNB-DUs are only visible to other gNBs and the 5GC as a gNB. In other words, the F1 interface is not visible beyond gNB-CU.

5G/NR technology shares many similarities with fourth-generation (4G) Long-Term Evolution (LTE) technology. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. However, time-frequency resources can be configured much more flexibly for an NR cell than for an LTE cell. For example, rather than a fixed 15-kHz OFDM sub-carrier spacing (SCS) as in LTE, NR SCS can range from 15 to 240 kHz, with even greater SCS considered for future NR releases.

In addition to providing coverage via cells as in LTE, NR networks also provide coverage via "beams." In general, a downlink (DL, i.e., network to UE) "beam" is a coverage area of a network-transmitted reference signal (RS) that may be measured or monitored by a UE. In NR, for example, RS can include any of the following: synchronization signal/PBCH block (SSB), channel state information RS (CSI-RS), tertiary reference signals (or any other sync signal), positioning RS (PRS), demodulation RS (DMRS), phase-tracking RS (PTRS), *etc.* In general, SSB is available to all UEs regardless of the state of their connection with the network, while other RS (*e.g.,* CSI-RS, DM-RS, PTRS) are associated with specific UEs that have a network connection.

3GPP standards provide various ways for positioning (e.g., determining the position of, locating, and/or determining the location of) UEs operating in NR networks. In general, a positioning node configures a target device (e.g., UE) and/or radio network nodes (RNN, e.g., gNB, ng-eNB, or RNN dedicated for positioning measurements) to perform one or more positioning measurements according to one or more positioning methods. For example, the positioning measurements can include timing (and/or timing difference) measurements on UE, network, and/or satellite transmissions. The positioning measurements are used by the target device, the measuring node, and/or the positioning node to determine the target device's location.

Positioning in NR Rel-16 was developed based on network-transmitted positioning reference signals (PRS), which can enhance location capabilities. For example, PRS transmission in low and high frequency bands (i.e., below and above 6GHz) and use of massive antenna arrays provide additional degrees of freedom to substantially improve positioning accuracy. Further enhancements are planned for NR Rel-17, including "on-demand PRS" whereby the UE can request the network to transmit PRS in a configuration that facilitates UE positioning measurements and (optionally) position determination.

3GPP draft R2-2106084 proposes a Stage 2 description for on-demand DL-PRS.

3GPP draft R2-2105338 discusses support of on-demand PRS and related procedures.

### SUMMARY

However, Applicants have recognized that there are various problems, issues, and/or difficulties related to transmission of PRS in the split-node architecture shown in Figure 1.

Embodiments of the present disclosure provide specific improvements to positioning of UEs in a wireless network, such as by providing, enabling, and/or facilitating solutions to overcome exemplary problems summarized above and described in more detail below.

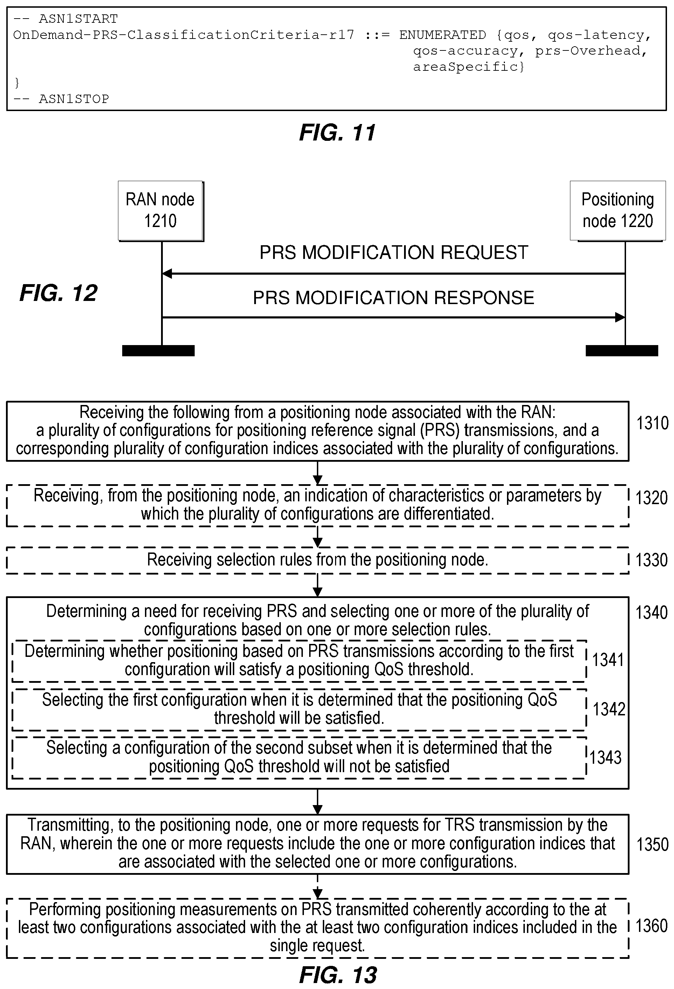

Embodiments include methods (*e.g.,* procedures) for a UE configured for positioning in a radio access network (RAN). The claimed invention corresponds to fig. 13-15 and to the related text in the description. The remaining figures and the text of the description are intended to better explain the invention.

These exemplary methods can include receive the following from a positioning node associated with the RAN: a plurality of configurations for PRS transmitted by nodes of the RAN, and a corresponding plurality of configuration indices associated with the plurality of configurations. In other words, each configuration is represented by, corresponds to, and/or is associated with a configuration index, and vice versa. For example, the positioning node can be an LMF. These exemplary methods can also include determining a need for receiving PRS and selecting one or more of the plurality of configurations based on one or more selection rules. These exemplary methods can also include transmitting to the positioning node one or more requests for TRS transmission by the RAN. The one or more requests include the one or more configuration indices that are associated with the selected one or more configurations.

In various embodiments, the plurality of configurations can be differentiated from each other based on one or more of the following characteristics or parameters:
- PRS transmission periodicity;
- PRS transmission bandwidth;
- number of PRS transmission frequency layers used;
- particular PRS transmission frequency layers used;
- number of RAN nodes that transmit PRS;
- particular RAN nodes that transmit PRS;
- geographic arrangement of RAN nodes that transmit PRS;
- number of PRS resource sets per node;
- number of PRS per PRS resource set;
- energy consumption and/or signaling overhead associated with transmitting PRS according to the configuration;
- relevant geographic area;
- positioning spatial dimension;
- positioning accuracy quality of service (QoS); and
- positioning latency QoS.

In some embodiments, these exemplary methods can also include receiving, from the positioning node, an indication of the characteristics or parameters by which the plurality of configurations are differentiated. In such embodiments, selecting one or more of the plurality of configurations can be based on the indicated characteristics or parameters. In some embodiments, these exemplary methods can also include receiving the selection rules from the positioning node.

In some embodiments, the plurality of configurations include a first configuration that includes default values for configuration parameters, and one or more further configurations. Each further configuration includes only ones of the configuration parameters having different values than the default values. In some of these embodiments, the first configuration can be received via a broadcast first system information block (SIB) and the one or more further configurations can be received via a broadcast second SIB. In some of these embodiments, the first SIB indicates that the first configuration is one of the following: a default configuration, or an active configuration.

In some embodiments, each request includes one index associated with one selected configuration. In some of these embodiments, the selection rules include a sequential order in which the respective configurations can be requested by the UE.

In other of these embodiments, the one or more requests include an initial request and one or more subsequent requests and the selection rules include: a first rule identifying a first subset of configurations that can be requested by the UE in the initial request; and a second rule identifying a second subset of configurations that can be requested by the UE in the subsequent requests. In some variants, the first subset of configurations includes a first configuration that requires lowest energy to transmit PRS and the second subset includes at least one configuration that requires more energy to transmit PRS than the first configuration.

In some examples of these variants, the selecting operations can include the following: determining whether positioning based on PRS transmissions according to the first configuration will satisfy a positioning quality of service (QoS) threshold; selecting the first configuration when it is determined that the positioning QoS threshold will be satisfied; and selecting a configuration of the second subset when it is determined that the positioning QoS threshold will not be satisfied. In some cases, the positioning QoS threshold is related to accuracy and/or latency.

In other examples of these variants, the second subset includes a second configuration that requires more energy than the first configuration and a third configuration that requires more energy than the second configuration. Furthermore, the one or more subsequent requests include a first subsequent request and a second subsequent request after the first subsequent request, while the second rule identifies that the second configuration can be selected for the first subsequent request and that the third configuration can be selected for the second subsequent request.

In other embodiments, the one or more requests include a single request that includes at least two configuration indices. The selection rules include a third rule indicating one of more configuration parameters that must be common among the at least two configurations associated with the at least two configuration indices included in the single request. In some variants, the third rule indicates that at least the following parameters must be common among the at least two configurations: PRS transmission periodicity and particular RAN nodes that transmit PRS.

In some of these embodiments, these exemplary methods can also include performing positioning measurements on PRS transmitted coherently according to the at least two configurations associated with the at least two configuration indices included in the single request.

Other embodiments include methods (*e.g.,* procedures) for a positioning node associated with a RAN.

These exemplary methods can include determining a plurality of configurations for PRS transmitted by the nodes of the RAN. The plurality of configurations are associated with a corresponding plurality of configuration indices. These exemplary methods can also include sending, to the RAN nodes and to a UE operating in the RAN, the plurality of configurations and the associated plurality of configuration indices. These exemplary methods can also include receiving from the UE one or more requests for PRS transmission by the RAN. The one or more requests include one or more of the plurality of configuration indices that are associated with one or more of the plurality of configurations that were selected by the UE.

In various embodiments, the plurality of configurations can be differentiated from each other based on any of the characteristics or parameters summarized above in relation to UE embodiments. In some embodiments, these exemplary methods can also include sending, to the UE, an indication of the characteristics or parameters by which the plurality of configurations are differentiated.

In some embodiments, the plurality of configurations can include a first configuration that includes default values for configuration parameters, and one or more further configurations. Each further configuration includes only ones of the configuration parameters having different values than the default values. In some of these embodiments, the first configuration can be sent via broadcast of a first SIB by the RAN and the one or more further configurations can be sent via broadcast of a second SIB by the RAN. In some of these embodiments, the first SIB indicates that the first configuration is one of the following: a default configuration or an active configuration.

In some embodiments, these exemplary methods can also include configuring the RAN nodes to transmit PRS according to one of the following: the one or more configurations selected by the UE; or one or more further configurations selected by the positioning node. In some of these embodiments, these exemplary methods can also include sending to the UE selection rules for selecting among the plurality of configurations.

In some of these embodiments, each request includes one index associated with one configuration selected by the UE. In some variants of these embodiments, the selection rules can include a sequential order in which the respective configurations can be requested by the UE.

In other variants of these embodiments, the one or more requests can include an initial request and one or more subsequent requests, and the selection rules can include: a first rule identifying a first subset of configurations that can be requested by the UE in the initial request; and a second rule identifying a second subset of configurations that can be requested by the UE in the subsequent requests.

In some variants, the first subset includes a first configuration that requires lowest energy to transmit PRS and the second subset includes at least one configuration that requires more energy to transmit PRS than the first configuration. In some examples of these variants, the selection rules can include a positioning QoS threshold for selection between the first configuration and configurations of the second subset. In some cases, the positioning QoS threshold is related to accuracy and/or latency.

In other examples of these variants, the second subset includes a second configuration that requires more energy than the first configuration and a third configuration that requires more energy than the second configuration. Furthermore, the one or more subsequent requests include a first subsequent request and a second subsequent request after the first subsequent request, while the second rule identifies that the second configuration can be selected for the first subsequent request and that the third configuration can be selected for the second subsequent request.

In other of these embodiments, the one or more requests include a single request that includes at least two configuration indices. The selection rules include a third rule indicating one of more configuration parameters that must be common among the at least two configurations associated with the at least two configuration indices included in the single request. In some variants, the third rule indicates that at least the following parameters must be common among the at least two configurations: PRS transmission periodicity and particular RAN nodes that transmit PRS. In some of these embodiments, configuring the RAN nodes includes configuring a plurality of the RAN nodes to transmit PRS coherently according to the at least two configurations associated with the at least two configuration indices included in the single request.

In some embodiments, determining the plurality of configurations includes obtaining a default configuration for PRS transmission and determining the plurality of configurations (e.g., sent to the UE and RAN nodes) based on the following:
- measurements made by UEs on PRS transmitted according to the default configuration;
- capabilities of the nodes transmitting the PRS;
- numbers of UEs operating in the RAN; and
- one or more differentiating characteristics or parameters (e.g., such as discussed above).

In some embodiments, determining the plurality of configurations can include the adapting the plurality of configurations based on one or more of the following:
- measurements made by UEs on PRS transmitted according to the plurality of configurations;
- updated capabilities of the nodes;
- updated numbers of UEs operating in the RAN; and
- the one or more differentiating characteristics or parameters.

Other embodiments include methods (*e.g.,* procedures) for a RAN node.

These exemplary methods can include receiving the following from a positioning node (e.g., LMF) associated with the RAN: a plurality of configurations for PRS transmitted by nodes of the RAN, and a corresponding plurality of configuration indices associated with the plurality of configurations. In other words, each configuration is represented by, corresponds to, and/or is associated with a configuration index, and vice versa. These exemplary methods can also include subsequently receiving from the positioning node one or more requests for PRS transmission. The one or more requests include one or more of the plurality of configuration indices. These exemplary methods can also include transmitting PRS according to one or more of the configurations associated with the one or more configuration indices included in the one or more requests.

In various embodiments, the plurality of configurations can be differentiated from each other based on any of the characteristics or parameters discussed above in relation to UE embodiments.

In some embodiments, the plurality of configurations can include a first configuration that includes default values for configuration parameters, and one or more further configurations. Each further configuration includes only ones of the configuration parameters having different values than the default values. In some of these embodiments, these exemplary methods can also include broadcasting the first configuration in a first SIB and the one or more further configurations in a second SIB. In some of these embodiments, the first SIB indicates that the first configuration is one of the following: a default configuration, or an active configuration.

In some embodiments, the one or more requests include an initial request and one or more subsequent requests and the configurations include: a first subset of configurations that can be requested by the UE in the initial request; and a second subset of configurations that can be requested by the UE in the subsequent requests. In some of these embodiments, the first subset of configurations includes a first configuration that requires lowest energy to transmit PRS and the second subset includes at least one configuration that requires more energy to transmit PRS than the first configuration. In some variants, the second subset includes a second configuration that requires more energy than the first configuration and a third configuration that requires more energy than the second configuration.

In other embodiments, the one or more requests include a single request that includes at least two configuration indices. At least PRS transmission periodicity is common among the at least two configurations associated with the at least two configuration indices included in the single request. In some of these embodiments, transmitting PRS can transmitting PRS coherently according to the at least two configurations associated with the at least two configuration indices included in the single request.

Other embodiments include UEs (e.g., wireless devices, etc.), positioning nodes (e.g., LMFs, E-SMLCs, SUPL nodes, etc.), and RAN nodes (*e.g.*, base stations, eNBs, gNBs, ng-eNBs, TRPs, *etc*.) configured to perform operations corresponding to any of the exemplary methods described herein. Other embodiments include non-transitory, computer-readable media storing program instructions that, when executed by processing circuitry, configure such UEs, positioning nodes, or RAN nodes to perform operations corresponding to any of the exemplary methods described herein.

Embodiments described herein provide flexible and efficient techniques to support on-demand PRS transmission when network conditions change. Embodiments can also be used to select PRS configurations that are suitable for not just one but many UEs, which provides more efficient UE positioning based on DL PRS transmissions. Embodiments can also reduce energy consumption of RAN nodes by avoiding transmissions of PRS resources that are not needed.

These and other objects, features, and advantages of embodiments of the present disclosure will become apparent upon reading the following Detailed Description in view of the Drawings briefly described below.

### BRIEF DESCRIPTION OF THE DRAWINGS

Figures 1-2 illustrate two high-level views of an exemplary 5G/NR network architecture.
Figure 3 shows exemplary NR user plane (UP) and control plane (CP) protocol layers.
Figure 4 is a block diagram illustrating a high-level architecture for UE positioning in NR networks.
Figure 5 shows a signal flow diagram for an exemplary multi-RTT positioning procedure.
Figure 6 shown an example partitioning of positioning-related functionality in the split-gNB architecture shown in Figure 1.
Figure 7 shows an exemplary hybrid transmit beamforming arrangement.
Figures 8A-B show two exemplary beam sweeping arrangements involving two and three subarrays, respectively.
Figures 9-10 show two exemplary signaling procedures used to obtain a positioning reference signal (PRS) configuration, in accordance with two different scenarios.
Figure 11 shows an ASN.1 data structure for an exemplary *OnDemand-PRS-ClassificationCriteria* field, according to various embodiments of the present disclosure.
Figure 12 shows a signaling flow between a positioning node (e.g., LMF) and a RAN node (e.g., gNB) according to various embodiments of the present disclosure.
Figure 13 shows a flow diagram of an exemplary method (e.g., procedure) for a UE, according to various embodiments of the present disclosure.
Figure 14 shows a flow diagram of an exemplary method (e.g., procedure) for a positioning node (e.g., LMF), according to various embodiments of the present disclosure.
Figure 15 shows a flow diagram of an exemplary method (e.g., procedure) for a RAN node (e.g., gNB, TRP, etc.), according to various embodiments of the present disclosure.
Figure 16 shows a communication system according to various embodiments of the present disclosure.
Figure 17 shows a UE according to various embodiments of the present disclosure.
Figure 18 shows a network node according to various embodiments of the present disclosure.
Figure 19 shows host computing system according to various embodiments of the present disclosure.
Figure 20 is a block diagram of a virtualization environment in which functions implemented by some embodiments of the present disclosure may be virtualized.
Figure 21 illustrates communication between a host computing system, a network node, and a UE via multiple connections, at least one of which is wireless, according to various embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided as examples to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the enclosed embodiments will be apparent from the following description.

Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a New Radio (NR) base station (gNB) in a 3GPP Fifth Generation (5G) NR network or an enhanced or evolved Node B (eNB) in a 3GPP LTE network), base station distributed components (*e.g.*, CU and DU), a high-power or macro base station, a low-power base station (*e.g.*, micro, pico, femto, or home base station, or the like), an integrated access backhaul (IAB) node, a transmission point (TP), a transmission reception point (TRP), a remote radio unit (RRU or RRH), and a relay node.
- Core Network Node: As used herein, a "core network node" is any type of node in a core network. Some examples of a core network node include, e.g., a Mobility Management Entity (MME), a serving gateway (SGW), a PDN Gateway (P-GW), a Policy and Charging Rules Function (PCRF), an access and mobility management function (AMF), a session management function (SMF), a user plane function (UPF), a Charging Function (CHF), a Policy Control Function (PCF), an Authentication Server Function (AUSF), a location management function (LMF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*
- Network Node: As used herein, a "network node" is any node that is either part of the radio access network (*e.g.*, a radio access node or equivalent name discussed above) or of the core network *(e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.*, administration) in the cellular communications network.
- Base station: As used herein, a "base station" may comprise a physical or a logical node transmitting or controlling the transmission of radio signals, *e.g.,* eNB, gNB, ng-eNB, en-gNB, centralized unit (CU)/distributed unit (DU), transmitting radio network node, transmission point (TP), transmission reception point (TRP), remote radio head (RRH), remote radio unit (RRU), Distributed Antenna System (DAS), relay, *etc.*
- Location server: As used herein, "location server" can refer to a network node with positioning functionality, *e.g.,* ability to provide assistance data and/or request positioning measurements and/or calculate a location based on positioning measurements. A location server may or may not be part of a base station.
- Positioning signals: As used herein, "positioning signals" may include any signal or channel to be received by the UE for performing a positioning measurement such as a DL reference signal, PRS, SSB, synchronization signal, DM-RS, CSI-RS, *etc.*
- Positioning measurements: As used herein, "positioning measurements" may include timing measurements (*e.g.,* time difference of arrival, TDOA, RSTD, time of arrival, TOA, Rx-Tx, RTT, *etc.*)*,* power-based measurements (*e.g.,* RSRP, RSRQ, SINR, *etc*.), and/or identifier detection/measurement (*e.g.,* cell ID, beam ID, *etc.)* that are configured for a positioning method (*e.g.,* OTDOA, E-CID, *etc.).* UE positioning measurements may be reported to a network node or may be used for positioning purposes by the UE.
- Positioning beam: As used herein, a "positioning beam" can include any beam carrying at least one positioning signal and/or that is used for a positioning purpose such as for measurements supporting one or more positioning methods (e.g., OTDOA, AOA, etc.).. A positioning beam can have its own explicit identity or can be identified through an index associated with a specific signal that the beam carries.

The above definitions are not meant to be exclusive. In other words, various ones of the above terms may be explained and/or described elsewhere in the present disclosure using the same or similar terminology. Nevertheless, to the extent that such other explanations and/or descriptions conflict with the above definitions, the above definitions should control.

Note that the description given herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

Figure 2 shows another high-level view of an exemplary 5G network architecture, including a NG-RAN 299 and 5GC 298. NG-RAN 299 can include gNBs (*e.g.,* 210a,b) and ng-eNBs (*e.g.,* 220a,b) that are interconnected with each other via respective Xn interfaces. The gNBs and ng-eNBs are also connected via the NG interfaces to 5GC 298, more specifically to the Access and Mobility Management Functions (AMFs, *e.g.,* 230a,b) via respective NG-C interfaces and to the User Plane Functions (UPFs, *e.g.,* 240a,b) via respective NG-U interfaces. Moreover, the AMFs can communicate with one or more policy control functions (PCFs, e.g., 250a,b) and network exposure functions (NEFs, e.g., NEFs 260a,b).

Each of the gNBs 210 can support the NR radio interface including frequency division duplexing (FDD), time division duplexing (TDD), or a combination thereof. Each of ng-eNBs 220 can support the fourth-generation (4G) Long-Term Evolution (LTE) radio interface. Unlike conventional LTE eNBs, however, ng-eNBs 220 connect to the 5GC via the NG interface. Each of the gNBs and ng-eNBs can serve a geographic coverage area including one more cells, such as cells 211a-b and 221a-b shown in Figure 2. Depending on the particular cell in which it is located, a UE 205 can communicate with the gNB or ng-eNB serving that particular cell via the NR or LTE radio interface, respectively. Although Figure 2 shows gNBs and ng-eNBs separately, it is also possible that a single NG-RAN node provides both types of functionality.

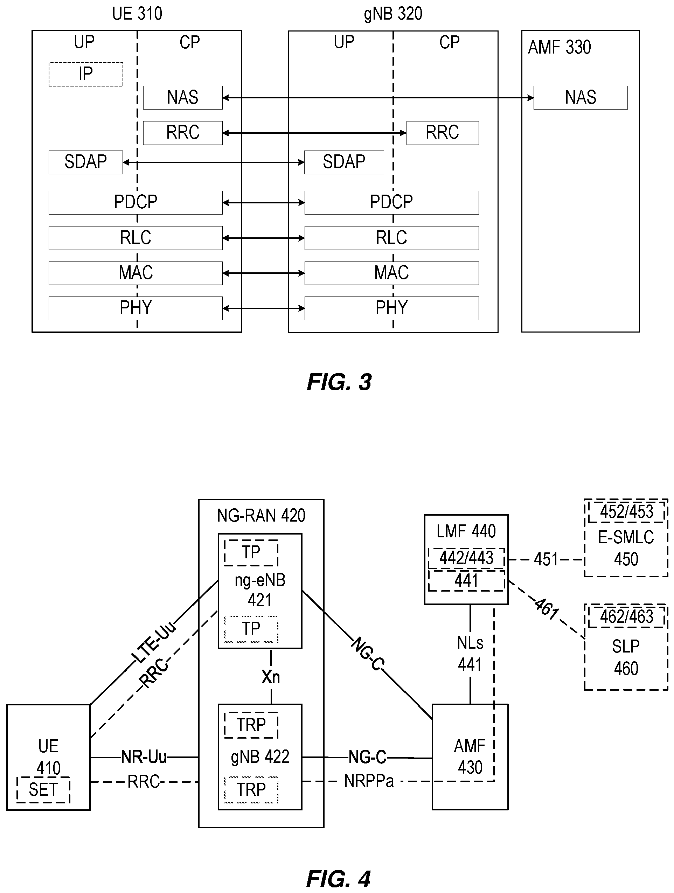

Positioning-related information, such as assistance data and positioning measurements, can be communicated between network and UE via user plane (UP) and control plane (CP). Figure 3 shows an exemplary configuration of NR UP and CP protocol layers between a UE (310), a gNB (320), and an AMF (330), such as those shown in Figures 1-2. The Physical (PHY), Medium Access Control (MAC), Radio Link Control (RLC), and Packet Data Convergence Protocol (PDCP) layers between the UE and the gNB are common to UP and CP. The PDCP layer provides ciphering/deciphering, integrity protection, sequence numbering, reordering, and duplicate detection for both CP and UP. In addition, PDCP provides header compression and retransmission for UP data.

On the UP side, Internet protocol (IP) packets arrive to the PDCP layer as service data units (SDUs), and PDCP creates protocol data units (PDUs) to deliver to RLC. The Service Data Adaptation Protocol (SDAP) layer handles quality-of-service (QoS) including mapping between QoS flows and Data Radio Bearers (DRBs) and marking QoS flow identifiers (QFI) in UL and DL packets. The RLC layer transfers PDCP PDUs to the MAC through logical channels (LCH). RLC provides error detection/correction, concatenation, segmentation/reassembly, sequence numbering, reordering of data transferred to/from the upper layers. The MAC layer provides mapping between LCHs and PHY transport channels, LCH prioritization, multiplexing into or demultiplexing from transport blocks (TBs), hybrid ARQ (HARQ) error correction, and dynamic scheduling (on gNB side). The PHY layer provides transport channel services to the MAC layer and handles transfer over the NR radio interface, e.g., via modulation, coding, antenna mapping, and beam forming.

On CP side, the non-access stratum (NAS) layer is between UE and AMF and handles UE/gNB authentication, mobility management, and security control. The RRC layer sits below NAS in the UE but terminates in the gNB rather than the AMF. RRC controls communications between UE and gNB at the radio interface as well as the mobility of a UE between cells in the NG-RAN. RRC also broadcasts system information (SI) and performs establishment, configuration, maintenance, and release of DRBs and Signaling Radio Bearers (SRBs) and used by UEs. Additionally, RRC controls addition, modification, and release of carrier aggregation (CA) and dual-connectivity (DC) configurations for UEs. RRC also performs various security functions such as key management.

After a UE is powered ON it will be in the RRC_IDLE state until an RRC connection is established with the network, at which time the UE will transition to RRC_CONNECTED state (*e.g.*, where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC_IDLE UE receives SI broadcast in the cell where the UE is camping, performs measurements of neighbor cells to support cell reselection, and monitors a paging channel on PDCCH for pages from 5GC via gNB. An NR UE in RRC_IDLE state is not known to the gNB serving the cell where the UE is camping. However, NR RRC includes an RRC_INACTIVE state in which a UE is known (e.g., via UE context) by the serving gNB. RRC_INACTIVE has some properties like a "suspended" condition used in LTE.

Three important functional elements of the 3GPP positioning architecture are LCS Client, LCS target, and LCS Server. The LCS Server is a physical or logical entity (e.g., a location server) that manages positioning for an LCS target (e.g., a UE) by collecting measurements and other location information, assisting the LCS target in measurements when necessary, and estimating the LCS target location. An LCS Client is a software and/or hardware entity that interacts with an LCS Server for the purpose of obtaining location information for one or more LCS targets (i.e., the entities being positioned) such as a UE. LCS Clients may also reside in the LCS targets themselves. An LCS Client sends a request to an LCS Server to obtain location information, and the LCS Server processes and serves the received requests and sends the positioning result and optionally a velocity estimate to the LCS Client. A positioning request can be originated from the terminal or a network node or external client. Position calculation can be conducted, for example, by the LCS Server (e.g., E-SMLC or SLP) or by the LCS target (e.g., a UE).

Additionally, the following positioning methods are supported in NR:
- Enhanced Cell ID (E-CID). Utilizes information to associate the UE with the geographical area of a serving cell, and then additional information to determine a finer granularity position. The following measurements are supported for E-CID: AoA (base station only), UE Rx-Tx time difference, timing advance (TA) types 1 and 2, reference signal received power (RSRP), and reference signal received quality (RSRQ).
- Assisted GNSS. GNSS information retrieved by the UE, supported by assistance information provided to the UE from the E-SMLC.
- OTDOA (Observed Time Difference of Arrival). The UE receives and measures Global Navigation Satellite System (GNSS) signals, supported by assistance information provided to the UE from E-SMLC.
- UTDOA (Uplink TDOA). The UE is requested to transmit a specific waveform that is detected by multiple location measurement units (LMUs, which may be standalone, co-located or integrated into an eNB) at known positions. These measurements are forwarded to the E-SMLC for multilateration.
- Multi-RTT: The device (e.g., UE) computes UE Rx-Tx time difference and gNBs compute gNB Rx-Tx time difference. The results are combined to find the UE position based upon round trip time (RTT) calculation.
- DL angle of departure (DL-AoD): gNB or LMF calculates the UE angular position based upon UE DL RSRP measurement results (e.g., of PRS transmitted by RAN nodes).
- UL angle of arrival (UL-AoA): gNB calculates the UL AoA based upon measurements of a UE's UL SRS transmissions.

In addition, one or more of the following positioning modes can be utilized in each of the positioning methods listed above:
- UE-Assisted: The UE performs measurements with or without assistance from the network and sends these measurements to the E-SMLC where the position calculation may take place.
- UE-Based: The UE performs measurements and calculates its own position with assistance from the network.
- Standalone: The UE performs measurements and calculates its own position without network assistance.
The detailed assistance data may include information about network node locations, beam directions, etc. The assistance data can be provided to the UE via unicast or via broadcast.

Figure 4 is a block diagram illustrating a high-level architecture for supporting UE positioning in NR networks. NG-RAN 420 can include nodes such as gNB 422 and ng-eNB 421, similar to the architecture shown in Figure 2. Each ng-eNB may control several transmission points (TPs), such as remote radio heads. Similarly, each gNB may control several transmission reception points (TRPs). Some or all of the TPs/TRPs may be DL-PRS-only for support of PRS-based TBS.

In addition, the NG-RAN nodes communicate with an AMF 430 in the 5GC via respective NG-C interfaces (both of which may or may not be present), while AMF 430 communicates with a location management function (LMF) 440 communicate via an NLs interface 441. An LMF supports various functions related to determination of UE locations, including location determination for a UE and obtaining DL location measurements or a location estimate from the UE, UL location measurements from the NG RAN, and non-UE associated assistance data from the NG RAN.

In addition, positioning-related communication between UE 410 and the NG-RAN nodes occurs via the RRC protocol, while positioning-related communication between NG-RAN nodes and LMF occurs via an NRPPa protocol. Optionally, the LMF can also communicate with an enhanced serving mobile location center (E-SMLC) 450 and a secure UP location (SUPL) location platform (SLP) 460 via communication interfaces 451 and 461, respectively. Communication interfaces 451 and 461 can utilize and/or be based on standardized protocols, proprietary protocols, or a combination thereof. E-SMLC 450 is responsible for UE positioning via LTE CP while SLP 460 is responsible for UE positioning via UP.

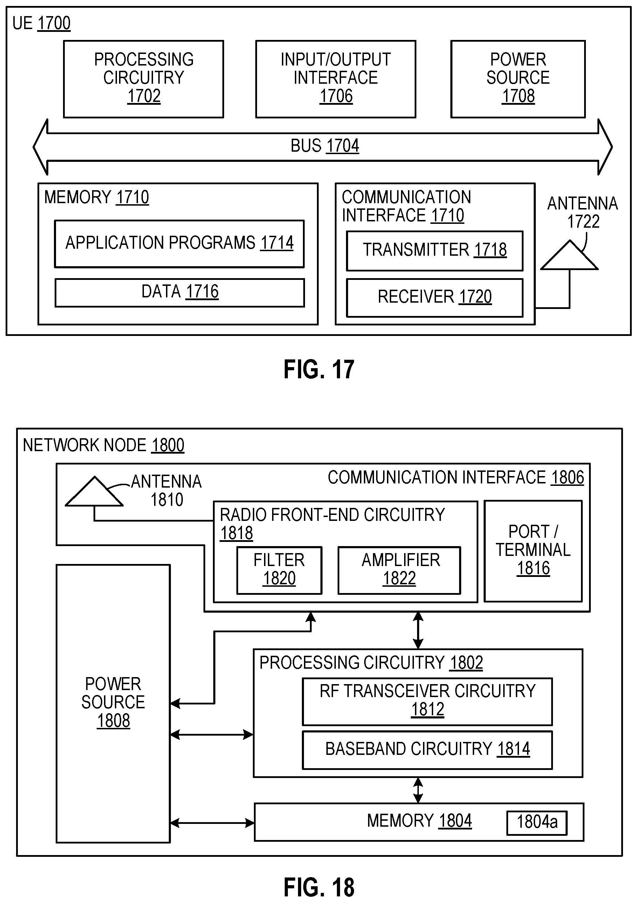

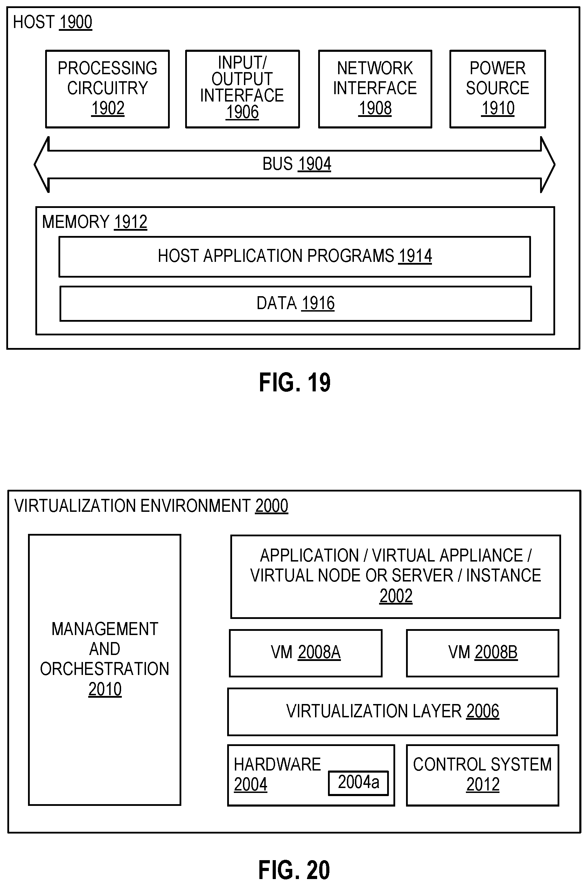

LMF 440 can also include, or be associated with, various processing circuitry 442, by which the LMF performs various operations described herein. Processing circuitry 442 can include similar types of processing circuitry as described herein in relation to other network nodes (*see, e.g.,* descriptions of Figures 18 and 20). LMF 440 can also include, or be associated with, a non-transitory computer-readable medium 443 storing instructions (also referred to as a computer program product) that can facilitate the operations of processing circuitry 442. Medium 443 can include similar types of computer memory as described herein in relation to other network nodes (*see, e.g.,* descriptions of Figures 18 and 20). Additionally, LMF 440 can include various communication interface circuitry 441 (e.g., Ethernet, optical, and/or radio transceivers) that can be used, e.g., for communication via the NLs interface. For example, communication interface circuitry 441 can be similar to other communication interface circuitry described herein in relation to other network nodes (*see, e.g.,* descriptions of Figures 18 and 20).

Similarly, E-SMLC 450 can also include, or be associated with, various processing circuitry 452, by which the E-SMLC performs various operations described herein. Processing circuitry 452 can include similar types of processing circuitry as described herein in relation to other network nodes (*see, e.g.,* descriptions of Figures 18 and 20). E-SMLC 450 can also include, or be associated with, a non-transitory computer-readable medium 453 storing instructions (also referred to as a computer program product) that can facilitate the operations of processing circuitry 452. Medium 453 can include similar types of computer memory as described herein in relation to other network nodes (s*ee, e.g.,* descriptions of Figures 18 and 20). E-SMLC 450 can also have communication interface circuitry that is appropriate for communicating via interface 451, which can be similar to other communication interface circuitry described herein in relation to other network nodes (*see, e.g.,* descriptions of Figures 18 and 20).

Similarly, SLP 460 can also include, or be associated with, various processing circuitry 462, by which the SLP performs various operations described herein. Processing circuitry 662 can include similar types of processing circuitry as described herein in relation to other network nodes (*see, e.g.,* descriptions of Figures 18 and 20). SLP 460 can also include, or be associated with, a non-transitory computer-readable medium 463 storing instructions (also referred to as a computer program product) that can facilitate the operations of processing circuitry 462. Medium 463 can include similar types of computer memory as described herein in relation to other network nodes (*see, e.g.,* descriptions of Figures 18 and 20). SLP 460 can also have communication interface circuitry that is appropriate for communicating via interface 461, which can be similar to other communication interface circuitry described herein in relation to other network nodes *(see, e.g.,* descriptions of Figures 18 and 20).

In typical operation, the AMF can receive a request for a location service associated with a particular target UE from another entity (e.g., a gateway mobile location center, GMLC), or the AMF itself can initiate some location service on behalf of a particular target UE (e.g., for an emergency call from the UE). The AMF then sends a location services (LS) request to the LMF. The LMF processes the LS request, which may include transferring assistance data to the target UE (i.e., to assist with UE-based and/or UE-assisted positioning) and/or determining the location of the target UE. The LMF then returns the result of these operations (e.g., a position estimate for the UE and/or an indication of any assistance data transferred to the UE) to the AMF or to another entity (e.g., GMLC) that requested the LS.

Various interfaces and protocols are used for, or involved in, NR positioning. The LTE Positioning Protocol (LPP) is used between a target device (e.g., UE in the control-plane, or SET in the user-plane) and a positioning server (e.g., LMF in the control-plane, SLP in the user-plane). LPP can use either CP or UP protocols as underlying transport. NRPP is terminated between a target device and the LMF. RRC protocol is used between UE and gNB (via NR radio interface) and between UE and ng-eNB (via LTE radio interface).

Furthermore, the NR Positioning Protocol A (NRPPa) carries information between the NG-RAN Node and the LMF and is transparent to the AMF. As such, the AMF routes the NRPPa PDUs transparently (e.g., without knowledge of the involved NRPPa transaction) over NG-C interface based on a Routing ID corresponding to the involved LMF. More specifically, the AMF carries the NRPPa PDUs over NG-C interface either in UE associated mode or non-UE associated mode. The NGAP protocol between the AMF and an NG-RAN node (e.g., gNB or ng-eNB) is used as transport for LPP and NRPPa messages over the NG-C interface. NGAP is also used to instigate and terminate NG-RAN-related positioning procedures.

LPP/NRPP are used to deliver messages such as positioning capability request, OTDOA positioning measurements request, and OTDOA assistance data to the UE from a positioning node (e.g., location server). LPP/NRPP are also used to deliver messages from the UE to the positioning node including, e.g., UE capability, UE measurements for UE-assisted OTDOA positioning, UE request for additional assistance data, UE configuration parameter(s) to be used to create UE-specific OTDOA assistance data, etc. NRPPa is used to deliver the information between ng-eNB/gNB and LMF in both directions. This can include LMF requesting some information from ng-eNB/gNB, and ng-eNB/gNB providing some information to LMF. For example, this can include information about PRS transmitted by ng-eNB/gNB that are to be used for OTDOA positioning measurements by the UE.

NR Rel-16 includes support for broadcasting of positioning assistance data via Positioning System Information Blocks (posSIBs), as specified in 3GPP TS 38.331 (v16.2.0). The posSIBs are carried in RRC System Information (SI) messages. The supported posSibTypes are shown in Table 1 below (also 3GPP TS 38.331 Table 7.2-1). The GNSS Common and Generic Assistance Data information elements (IEs) are defined in 3GPP TS 37.355 (v16.2.0) section 6.5.2.2. The OTDOA Assistance Data IEs and NR DL-TDOA/DL-AoD Assistance Data IEs are defined in 3GPP TS 37.355 section 7.4.2. The Barometric Assistance Data IEs are defined in 3GPP TS 37.355 section 6.5.5.8. The TBS (based on MBS signals) Assistance Data IEs are defined in 3GPP TS 37.355 section 6.5.4.8.

**Table 1.**

| | ***posSibType*** | ***assistanceDataElement*** |
|---|---|---|
| GNSS Common Assistance Data | *posSibType1-1* | *GNSS-ReferenceTime* |
| | *posSibType1-2* | *GNSS-ReferenceLocation* |
| | *posSibType1-3* | *GNSS-IonosphericModel* |
| | *posSibType1-4* | *GNSS-EarthOrientationParameters* |
| | *posSibType1-5* | *GNSS-RTK-ReferenceStationInfo* |
| | *posSibType1-6* | *GNSS-RTK-CommonObservationInfo* |
| | *posSibType1-7* | *GNSS-RTK-AuxiliaryStationData* |
| | *posSibType1-8* | *GNSS-SSR-CorrectionPoints* |
| GNSS Generic Assistance Data | *posSibType2-1* | *GNSS-TimeMode*/*List* |
| | *posSibType2-2* | *GNSS-DifferentialCorrections* |
| | *posSibType2-3* | *GNSS-NavigationModel* |
| | *posSibType2-4* | *GNSS-RealTimeIntegrity* |
| | *posSibType2-5* | *GNSS-DataBitAssistance* |
| | *posSibType2-6* | *GNSS-AcquisitionAssistance* |
| | *posSibType2-7* | *GNSS-Almanac* |
| | *posSibType2-8* | *GNSS-UTC-Model* |
| | *posSibType2-9* | *GNSS-AuxiliaryInformation* |
| | *posSibType2-10* | *BDS-DifferentialCorrections* |
| | *posSibType2-11* | *BDS-GridModelParameter* |
| | *posSibType2-12* | *GNSS-RTK-Observations* |
| | *posSibType2-13* | *GLO-RTK-BiasInformation* |
| | *posSibType2-14* | *GNSS-RTK-MAC-CorrectionDifferences* |
| | *posSibType2-15* | *GNSS-RTK-Residuals* |
| | *posSibType2-16* | *GNSS-RTK-FKP-Gradients* |
| | *posSibType2-17* | *GNSS-SSR-OrbitCorrections* |
| | *posSibType2-18* | *GNSS-SSR-ClockCorrections* |
| | *posSibType2-19* | *GNSS-SSR-CodeBias* |
| | *posSibType2-20* | *GNSS-SSR-URA* |
| | *posSibType2-21* | *GNSS-SSR-PhaseBias* |
| | *posSibType2-22* | *GNSS-SSR-STEC-Correction* |
| | *posSibType2-23* | *GNSS-SSR-GriddedCorrection* |
| | *posSibType2-24* | *NavIC-DifferentialCorrections* |
| | *posSibType2-25* | *NavIC-GridMode*/*Parameter* |
| OTDOA Assistance Data | *posSibType3-1* | *OTDOA-UE-Assisted* |
| Barometric Assistance Data | *posSibType4-1* | *Sensor-AssistanceDataList* |
| TBS Assistance Data | *posSibType5-1* | *TBS-AssistanceDatalist* |
| NR DL-TDOA/DL-AoD Assistance Data | *posSibType6-1* | *NR-DL-PRS-AssistanceData* |
| | *posSibType6-2* | *NR-UEB-TRP-LocationData* |
| | *posSibType6-3* | *NR-UEB-TRP-RTD-Info* |

PRS were introduced in LTE Rel-9 because cell-specific reference signals (CRS) were not sufficient for positioning. In particular, CRS could not guarantee the necessary probability of detection for at least three different cells needed to determine a position. In general, a neighbor cell's synchronization signals (PSS/SSS) and reference signals are generally detectable for signal-to-interference-and-noise ratio (SINR) ≥ -6 dB. Simulations have shown, however, that this SINR is available for the third-best detected cell in ≤ 70% of all cases, such that only two neighbor cells are detected in ≥ 30% of cases. Even this level of performance is based on an interference-free environment, which is unrealistic in a real-world scenario.

Even so, PRS have some similarities with CRS. For example, PRS is a pseudorandom QPSK sequence that is mapped in diagonal patterns with shifts in frequency and time to avoid collision with CRS and an overlap with the control channels (PDCCH).

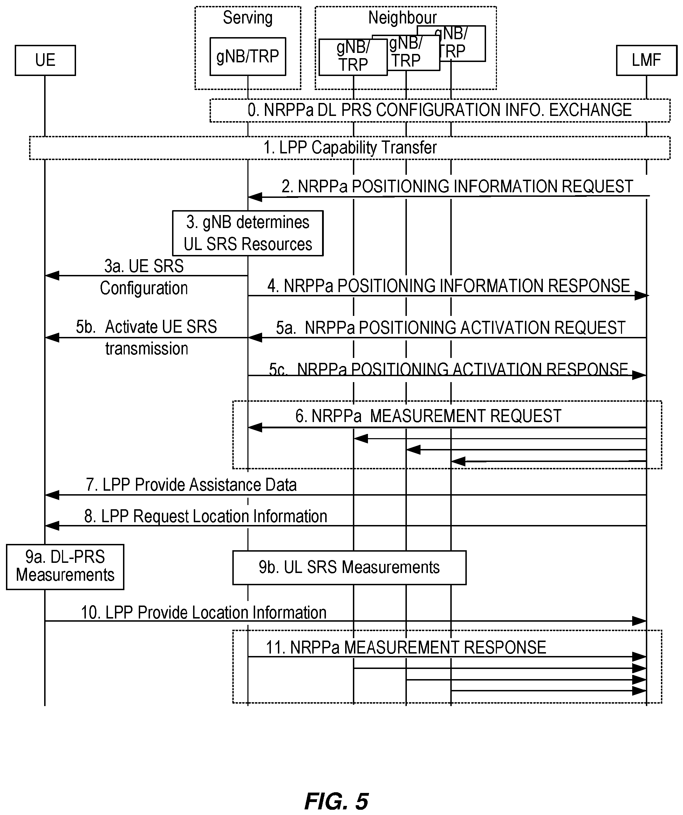

Figure 5 shows a signal flow diagram for an exemplary multi-RTT positioning procedure between a UE, a serving gNB/TRP, a plurality of neighbor gNBs/TRPs, and an LMF. Further details are provided in 3GPP TS 38.305 (v16.2.0) section 8.10.4. In this procedure, the UE measures DL-PRS transmitted by the respective gNBs/TRPs (operation 9a), which also measure UL-SRS transmitted by the UE (operation 9b).

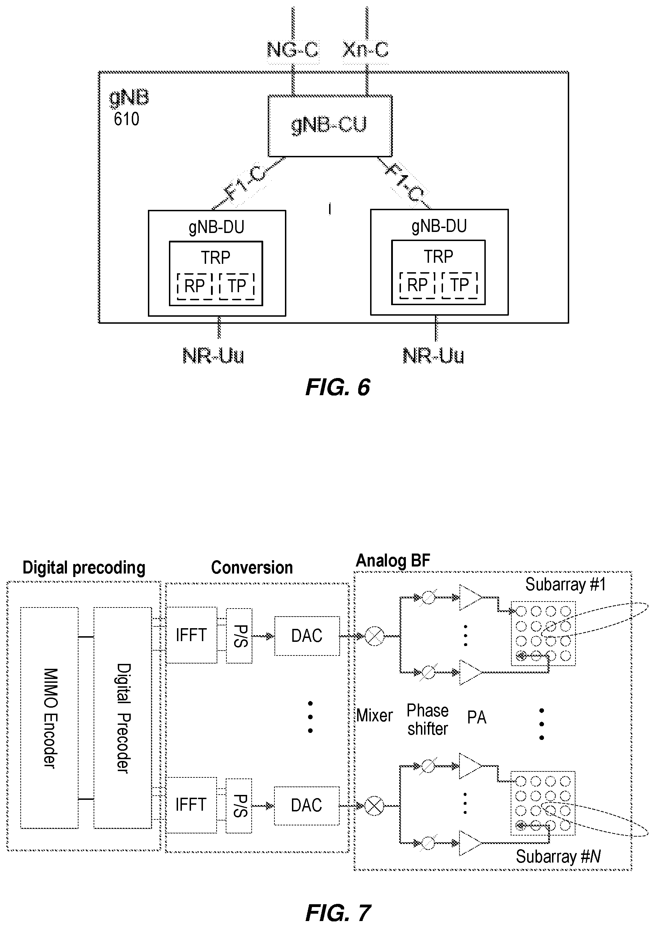

Figure 6 shown an example partitioning of positioning-related functionality in the split-gNB architecture shown in Figure 1. The gNB-DU hosts the TRP functionality shown in Figure 4, which may be divided into a transmission point (TP) and a reception point (RP). Location management messages can be transferred between gNB-CU and gNB-DU via the F1-C interface. For example, a gNB-CU can request TRP information and/or positioning measurements from a gNB-DU, and the gNB-DU can respond with the requested information (if available).

Recent advances in massive antenna systems (massive MIMO) can provide additional degrees of freedom to enable a more accurate user location estimation by exploiting spatial and angular domains of the propagation channel in combination with time measurements. These spatial techniques, also referred to as "beamforming", can be used on transmission beams and/or reception beams, by the network or by the UE.

Currently, two NR frequency ranges are explicitly distinguished in 3GPP: FR1 (below 6 GHz) and FR2 (above 6 GHz). It is known that high-frequency radio communication above 6 GHz suffers from significant path loss and penetration loss. One solution to address this issue is to deploy large-scale antenna arrays to achieve high beamforming gain, which is a reasonable solution due to the small wavelength of high-frequency signal. Such solutions are often referred to as multiple-input multiple-output (MIMO) or, in the case of large-scale antenna arrays anticipate for NR, massive MIMO. In particular, up to 64 beams are supported for FR2. In addition, it is expected that the greater number of antenna elements will also be used in FR1 to obtain more beamforming and multiplexing gain.

With massive MIMO, three approaches to beamforming have been discussed: analog, digital, and hybrid (a combination of analog and digital). Analog beamforming can compensate for high pathloss in NR scenarios, while digital precoding can provide additional performance gains (e.g., similar to MIMO for FR1) necessary to achieve a reasonable coverage. The implementation complexity of analog beamforming is significantly less than digital since it can utilize simple phase shifters, but it is limited in terms of multi-direction flexibility (i.e., a single beam can be formed at a time and the beams are then switched in time domain), transmission bandwidth (i.e., not possible to transmit over a sub-band), inaccuracies in the analog domain, etc.

Digital beamforming requires costly converters between the digital domain and the intermediate frequency (IF) radio domain. However, digital beamforming, which is often used today in LTE networks, provides the best performance in terms of data rate and multiplexing capabilities. For example, multiple beams over multiple sub-bands can be formed simultaneously. Even so, digital beamforming presents challenges in terms of power consumption, integration, and cost. Furthermore, while cost generally scales linearly with the number of transmit/receive units, the gains of digital beamforming increase more slowly.

Hybrid beamforming, which provides cost benefits from analog beamforming and capacity benefits from digital beamforming, is therefore desirable for NR. Figure 7 shows an exemplary hybrid transmit (TX) beamforming arrangement, which includes a digital precoding section and an analog beamforming (BF) section that are coupled by intermediate conversion circuitry. As shown in Figure 7, the analog BF portion includes independent analog circuitry for each of N subarrays of antenna elements. For each subarray, the analog circuitry includes mixers (e.g., from IF to RF), phase shifters, and power amplifiers (PAs). Each subarray can generate a beam separate from other subarrays. The conversion circuity includes independent IFFT modulators, parallel-to-serial converters (P/S), and digital-to-analog converters (DAC) for each of the N channels of the analog BF circuitry.

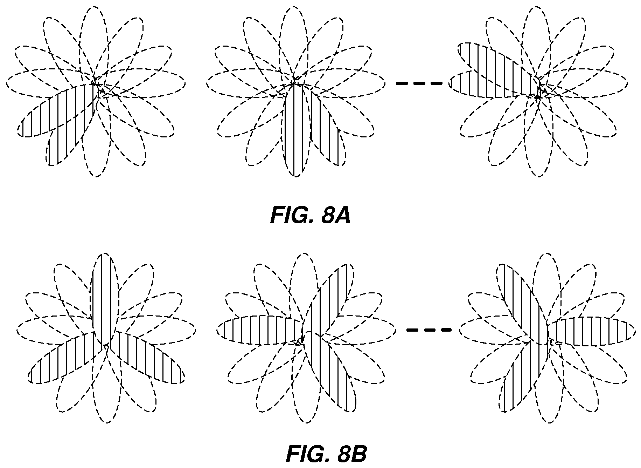

The analog beam of a subarray can be steered toward a single direction on each OFDM symbol, and hence the number of subarrays determines the number of beam directions and the corresponding coverage on each OFDM symbol. However, the number of beams to cover an entire served area is typically larger than the number of subarrays, especially when the individual beam-width is narrow. Therefore, to cover the entire served area, multiple transmissions with narrow beams steered differently in time domain are also likely to be needed. The provision of multiple narrow coverage beams for this purpose can be referred to as "beam sweeping". Figure 8 shows two exemplary beam sweeping arrangements involving two subarrays (Figure 8A) and three subarrays (Figure 8B).

For analog and hybrid beamforming, beam sweeping can be very important for providing necessary coverage in NR networks. For this purpose, multiple OFDM symbols, in which differently steered beams can be transmitted through subarrays, can be assigned and periodically transmitted. Base stations typically perform transmit beam sweeping for DL transmission and may also implement receive beam sweeping for UL reception. UEs typically perform receive beam sweeping for DL reception but may also implement transmit beam sweeping for UL transmission.

UEs and gNBs also perform beam measurements to evaluate quality of the received signal on DL and UL beams, respectively. For example, a UE measures quality on SSB beams based on parameters such as SS-SINR (signal-to-interference-and-noise ratio), SS-RSRP (reference signal received power), SS-RSRQ (reference signal received quality), etc. A gNB performs similar measurements on UL beams (e.g., SRS) from a UE but gNB measurements are not specified by 3GPP and left to vendor implementation.

UEs and gNBs also perform beam determination to determine a best or most suitable DL and UL beam, respectively, based on the beam measurements. UEs also report beam quality measurements and beam determination results to the gNB. Additionally, when a UE in RRC_CONNECTED state experiences poor channel conditions, it receives a beam failure indication from its lower layers (e.g., PHY) and can request beam failure recovery by sending a message to its serving gNB.

The term "spatial relation" to refer to a relationship between an UL RS and another RS, which can be either a DL RS or an UL RS. This is also defined from a UE perspective. If the UL RS is spatially related to a DL RS, it means that the UE should transmit the UL RS in the opposite (reciprocal) direction from which it received the corresponding DL RS. More precisely, the UE should apply the "same" Tx spatial filtering (or beamforming) configuration for transmitting the spatially-related UL RS as the Rx spatial filtering (or beamforming) configuration that it used for receiving the corresponding DL RS.

Spatial relations can also be used for PRS. In particular, each DL PRS is constructed as a DL PRS Resource set consisting of multiple DL PRS Resources. Each DL PRS Resource is transmitted over a separate beam. An UL SRS can have a spatial relation to a DL PRS Resource as signaled through the combination of a DL PRS Resource set ID and a DL PRS Resource ID. The UE will then transmit the UL SRS using the same antenna panel as it uses to receive the corresponding DL PRS resource and using the same (reciprocal) beam as it uses to receive the DL PRS Resource.

3GPP Rel-17 NR positioning enhancements include ongoing work for support of "on-demand PRS" in the network. This can involve two different scenarios or use cases. In a first scenario, on-demand PRS can involve configuring PRS on a per need basis, based on the pre-condition that no PRS are being transmitted. If an LCS client (e.g., GMLC, UE) requests positioning, the LMF needs to determine a suitable PRS configuration from scratch. A second scenario is where PRS is already being transmitted and either the UE may request or LMF may need to modify the current configuration.

The first scenario is similar to a scenario that occurs in real LTE PRS deployments: PRS is being transmitted but the LMF is unsure about the TRPs closest to UEs or cells to be included in the assistance data. In this case, E-CID is used as a pre-requisite procedure to provide LMF with the needed information. For on-demand PRS that are not currently being transmitted, the LMF may also request gNBs to perform E-CID to obtain SSB and CSI-RS RSRP measurements that can facilitate initiation of on-demand PRS transmissions.

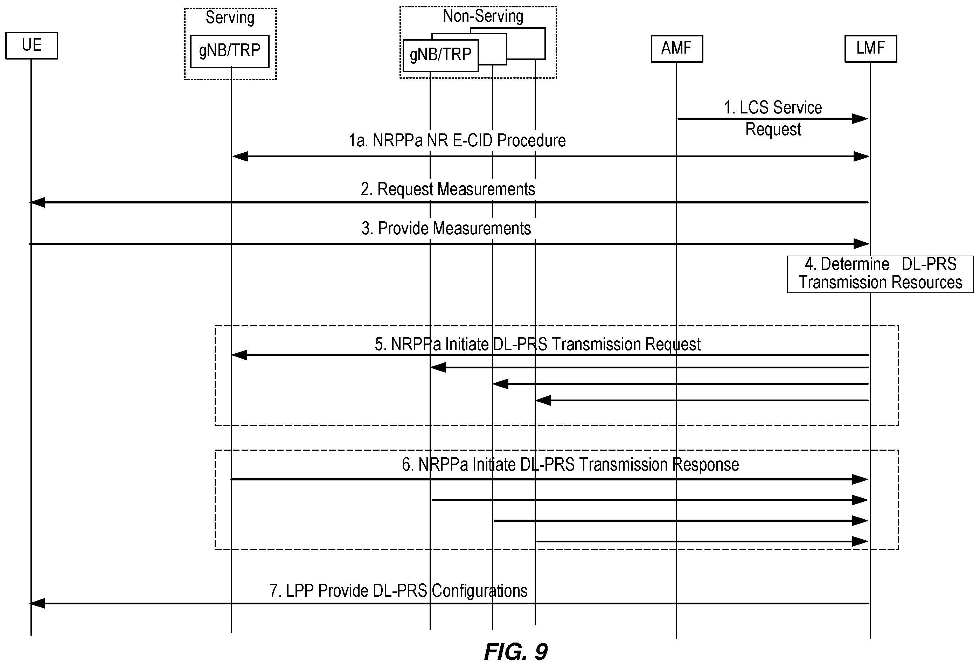

Figure 9 shows an exemplary signaling procedure used to obtain a PRS configuration, in accordance with this scenario. Although certain operations are given numerical labels, these are intended to facilitate the following description rather than to imply or require any particular operational order, unless expressly stated to the contrary.

In operation 1, the AMF transfers an LCS service request to an LMF. The LCS service request was received by the AMF from an LCS client residing in GMLC or UE. If the LCS client is in UE, it may include a measurement report (e.g., CSI-RS and SSB RSRP, E-CID report) as part of MO-LR request message. The UE's LCS client may also provide other details such as number of TRPs, beam direction, start time and duration for the DL-PRS transmission which may also be forwarded from AMF to LMF. In operation 1a, as an alternative, the LMF can receive a measurement report (e.g., CSI-RS and SSB RSRP) from the gNB as per the UL NR E-CID procedure defined in 3GPP TS 38.455. In operation 2, If the LCS client is the GMLC or the measurements are not available in operation 1, the LMF may request measurements from the UE. In operation 3, the UE provides the LMF with the measurements requested in operation 2.

In operations 4-5, the LMF determines the needed DL-PRS transmission resources and requests DL-PRS transmission from different gNBs (e.g., TRPs), which may include the UE's serving gNB(s) and other non-serving gNBs. In operation 6, the gNBs provide acknowledgement to the LMF for initiating the PRS transmission or may indicate failure if unable to initiate PRS transmission. In case of acknowledgement/success in operation 6, the LMF prepares the PRS configuration accordingly and provides to the UE in operation 7.

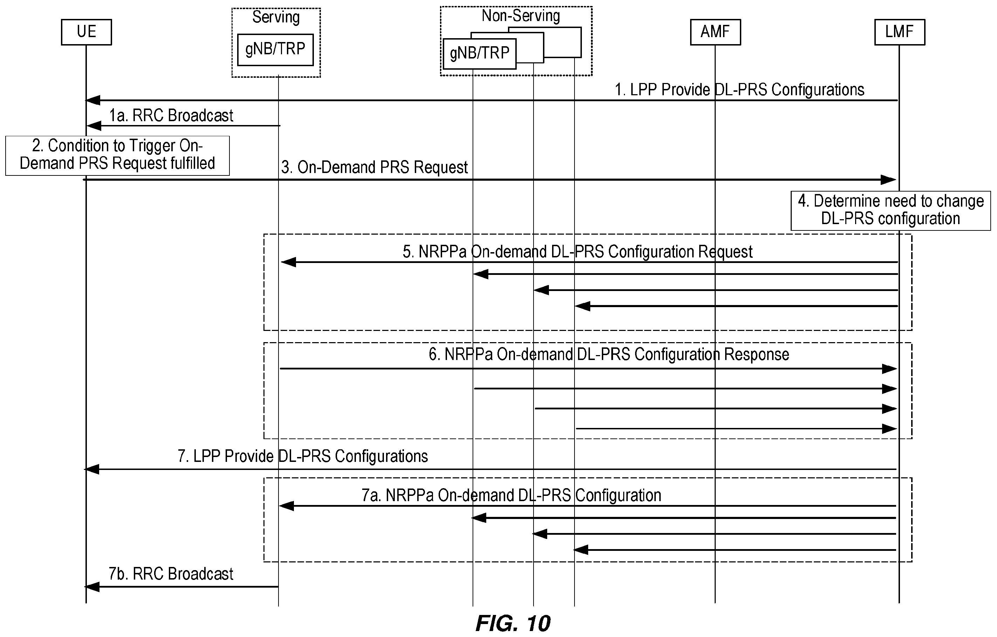

In the second scenario discussed above, when the LCS client wants to position the UE, certain DL-PRS are already being transmitted by the RAN. For example, there may be multiple pre-defined PRS configurations and UE may request one of the pre-defined configurations. Furthermore, the LMF may also change between different pre-defined PRS configurations. Figure 10 shows an exemplary signaling procedure used to obtain a PRS configuration, in accordance with this scenario. Although certain operations are given numerical labels, these are intended to facilitate the following description rather than to imply or require any particular operational order.

In operation 1, the LMF provides a PRS configuration to the UE via LPP. Alternately or in addition, in operation 1a, the PRS configuration can be provided to UE via RRC broadcast. In operation 2, the UE performs positioning measurements based upon the PRS configuration(s) received in operation(s) 1/1a. If UE is operating in UE-based positioning mode and certain conditions such as Positioning QoS are not met, or on the basis of measurement quality, confidence level, etc., the UE may determine the need to request on-demand PRS.

In operation 3, the UE sends an on-demand PRS request with its preferred configuration (e.g., configuration index) or a request to increase/decrease DL-PRS resources. In operation 4, the LMF determines whether there is need to change PRS configuration, as requested. The LMF may decide based upon input received from multiple UEs. In operation 5, based on the decision in operation 4, the LMF requests (via NRPPa) the serving and non-serving gNBs (e.g., TRPs) for the UE to change the current PRS configuration. In operation 6, the gNBs provide the PRS transmission update or an acknowledgement in an NRPPa response message accordingly.

In operation 7, the LMF provides the updated on-demand PRS configuration to the UE via LPP. Alternately or in addition, in operations 7a-7b, the LMF provides the on-demand PRS configuration to the gNBs, which provide the same to the UE via RRC broadcast.

There are currently several problems, issues, and/or difficulties with the on-demand PRS arrangements discussed above. For example, when the UE has been provided multiple pre-defined PRS configurations, it is not clear how the LMF should respond to a request from the UE for a specific one of these configurations (e.g., based on a configuration index). More specifically, since the pre-defined PRS configurations are used by all UEs, should the LMF change a currently-used PRS configuration based on a request from one UE? Even if the requested configuration is preferred by the UE, when and how is the LMF obliged to act on the request? Can the network wait until several UEs request the same PRS configuration to make a change?

Current pre-defined PRS configurations are generally related to quality of service (QoS). For example, one configuration (index 1) can be for high QoS with PRS of large bandwidth and short periodicity, a second configuration (index 2) can be for medium QoS with PRS of medium bandwidth and periodicity, etc. However, defining PRS configurations only based on QoS may be inadequate to cover all use cases and/or scenarios.

Furthermore, it is unclear what (if any) restrictions should be placed on the UE's selection of PRS configuration to request. For example, there may be a need to ensure that UEs do not always request the most resource-intensive configuration, even if that provides the best positioning performance for UEs. Put differently, there may be a need for rules to align UE requests with actual UE needs.

Additionally, pre-defined PRS configurations require cooperation between the LMF and the gNBs that actually transmit the DL-PRS, both in creating and in using such pre-defined configurations. For example, if the gNBs are currently using a configuration associated with a first index, then can the LMF request changing to any other pre-defined configuration, or only to a subset of other pre-defined configurations (e.g., next more or next less resource intensive)?

Accordingly, embodiments of the present disclosure provide flexible and efficient techniques for defining a set of PRS configurations for on-demand PRS requests, UE selection among pre-defined PRS configurations for such a request, LMF selection among pre-defined PRS configurations for configuring gNBs/TRPs, etc.

Embodiments can provide a network-friendly approach to support on-demand PRS transmission when network conditions change. Embodiments can also be used to select a PRS configuration that is suitable for not just one but all UEs, which provides more efficient UE positioning based on DL PRS transmissions. Embodiments can reduce energy consumption of RAN nodes by avoiding transmissions of PRS resources that are not needed .

For example, rather than positioning QoS, the LMF can define PRS configurations based on any of the following, individually or in any combination:
- posSIB broadcast size limitations.
- number of frequency layers, TRPs, DL-PRS Resource Sets, DL-PRS resources, etc. that can be accommodated in one posSIB, e.g., without segmentation or with a maximum upper limit/bound of segmentation, with upper limit X being a pre-defined number (e.g., X = 3, X = 5, etc.).
- default configuration that is indicated by an existing posSIB, plus a delta configuration provided in a new posSIB. The delta configuration points to what attributes (e.g., PRS configuration) can differ for the TRPs included in the default configurations. Thus, the configuration index points to different parameter configuration that is possible for the TRPs content in default configuration.
- number of TRPs and their associated resources (i.e., DL-PRS resource sets and resources per set) that are needed for acceptable performance of a positioning method. For example, in DL-TDOA distant TRPs may be needed for adequate GDOP but which can still be detected with certain acceptable level of SNR, SINR, RSSI, etc.
- different sets or groups of TRPs, e.g., group 1 has certain LOS, GDOP, or DL-PRS periodicity characteristics; group2 has other LOS, GDOP, or DL-PRS periodicity characteristics; etc.
- energy reduction and/or latency reduction.
- positioning orientation, e.g., horizontal, vertical, or another specific spatial dimension.

As another example, a UE can select a preferred configuration to indicate in an on-demand PRS request based on any of the following:
- UE mapping of an estimated or required level of error to a suitable configuration index.
- a network-configured order of configuration indices. In other words, the network sorts the indices in some order and requests the UE to select indices in that order. As a more specific example, if PRS configuration corresponding to index 3 has been provided, then the UE can select either index 2 or index 4 for the on-demand PRS request but no other indices (e.g., index 1 or index 5+).

Similar techniques can be used between LMF and gNBs to constrain LMF or gNB selection of pre-configured PRS configurations, including any of the following:
- LMF mapping of an estimated or required level of error to a suitable configuration index or indices, which the LMF can then request the gNBs to use. For example, the LMF can request a gNB to consider in a list of indices in a preferred order, e.g., indices 2, 4, and 5.
- a gNB-provided order of preference for configuration indices. In other words, the gNB sorts the indices in some order and requests the LMF to select indices in that order. As a more specific example, if PRS configuration corresponding to index 3 is being used, then the LMF can select either index 2 or index 4 for the on-demand request to the gNB, but not other indices (e.g., index 1 or index 5+).
- Independent of UE on-demand request. For example, if the configuration with index 1 is currently active and the positioning errors of all UEs meet certain requirements, the LMF can change to index 2 that has a longer periodicity.

In some embodiments, the LMF can determine pre-defined PRS configuration based on a reinforcement learning scheme. This can be helpful when on-demand PRS transmission has not started yet. For instance, the pre-defined PRS configurations can be based on X number of UEs present initially in the cells, Y TRPs deployed, Z default radio conditions, etc.

Subsequently these initial PRS configurations can be enhanced after PRS transmission has been initiated. For instance, the LMF can expand the patterns progressively following multiple positioning sessions using a learning approach to build different configurations that would fit for different scenarios. This can be considered a form of "crowdsourcing". When a new on-demand PRS request is received, the LMF can draw on this crowdsourced PRS information to determine which on-demand configuration will work best for the UE(s) and which modifications the gNBs/TRPs should use, rather than having to select a configuration indicated by a particular UE.

As shown in Table 1 above, the NR DL-TDOA/DL-AoD Assistance Data includes three SIBs, namely posSibType6-1, posSibType6-2, and posSibType6-3.

In some embodiments, posSIBType6-1 (*NR-DL-PRS-AssistanceData*) can indicate a default PRS configuration that includes a set of PRS configurations for a list of TRPs. In such embodiments, the default PRS configuration can be fixed.

In other embodiments, posSIBType6-1 (*NR-DL-PRS-AssistanceData*) can indicate an active PRS configuration that includes a set of PRS configurations for a list of TRPs. In such embodiments, the active PRS configuration can be dynamically changed.

In other embodiments, a new posSIB type can be defined (e.g., posSibType6-4) to include different configuration indices and their differential (or delta) configurations relative to the default or active DLPRS configuration indicated by posSIBType6-1. Example contents of posSibType6-4 can include:
- Configuration index 1: Larger bandwidth (BW) but same periodicity as compared to the default or active configuration provided in posSibType6-1.
- Configuration index 2: shorter Periodicity but same BW as compared to the default or active configuration provided in posSibType6-1.
- Configuration index 3: shorter periodicity and larger BW as compared to the default or active configuration provided in posSibType6-1.

Even though only BW and periodicity are mentioned in the above example, the configuration is not limited to these parameters and may include other parameters such as positioning frequency layer (PFL), TRP information, etc.

In some embodiments, the LMF may provide various rules that restrict the UE selection of the configuration index to include in an on-demand PRS request. For example, either index 1 or index 2 can be requested initially but index 3 can be requested only after PRS configuration associated with index 1 or index 2 has been provided to the UE. Furthermore, the UE may be restricted to request index 3 only when configurations based upon index 1 or index 2 do not fulfill the UE's positioning QoS or measurement quality, when the UE's positioning confidence level is below certain threshold, etc. These rules can be expressed as the following configuration settings:
- firstRequestRestrictedTo - INTEGER (1...n); where n = 2 in above example and thus UE may not initiate request for configuration index 3.
- SecondRequestAllowedFor - INTEGER (n...m) where n = 3 and 3 ≤ m ≤ predetermined maximum index value.
In some embodiments, there can be additional rules for a UE's subsequent requests.

In some embodiments, multiple DL PRS reference signals may be coherently transmitted such that the UE can coherently/jointly process the multiple DL PRS reference signals to improve positioning accuracy. In such embodiments, the multiple DL PRS reference signals could be configured as follows:
- Configuration index 1: Larger bandwidth (*BW1*) but same periodicity as the default/active configuration provided in *possibType6-1,* with the PRS corresponding to Configuration index 1 being transmitted in Positioning Frequency layer (PFL) 1.
- Configuration index 2: Larger bandwidth (*BW2*) but same periodicity as the default/active configuration provided in *possibType6-1* with the PRS corresponding to Configuration index 2 being transmitted in PFL 2.

In some embodiments, if the UE requires improved positioning accuracy, it may include multiple (e.g., two) configuration indices in the on-demand PRS request to the LMF. This can indicate that the UE requests the PRS reference signals corresponding to the multiple indices to be coherently transmitted. To facilitate coherent transmission/reception, some parameters such as periodicity and TRP index should be the same for the multiple requested PRS configurations.

In some embodiments, PRS configurations can be grouped based upon TRP capabilities for on-demand PRS. For example, all TRPs with same or similar capabilities are part of one group associated with one or more configuration indices.

In some embodiments, PRS configurations can be differentiated and/or grouped based upon GDOP (or other geometric classification), detectability by UEs, line of sight (LOS) vs. non-LOS transmissions, etc. This can be based on previous UE measurement reports or other received information.

In some embodiments, the configurations associated with the respective indices can be differentiated and/or grouped based on energy consumption (e.g., for TRPs and/or UEs). The example below includes indices corresponding to three different levels of energy consumption.
- Configuration index 1: *P* PFLs, TTRPs in every PFL, *Y* PRS resource sets in every TRP, *Z* resources per resource set. In some cases, *P, T, X,* and/or *Z* can be a function of posSIB maximum size, which is approximately 3000 bits. Hence, the configuration corresponding to index 1 is selected in such a way to be less than this maximum size.
- Configuration index 2: *P*/2 PFLs, *T*/2 TRPs in every PFL, *Y*/2 resource sets per TRP, *Z*/2 resources per resource set.
- Configuration index 3: *P*/3 PFLs, *T*/3 TRPs in every PFL, *Y*/3 resource sets per TRP, *Z*/3 resources per resource set.
This arrangement is based upon PRS overhead reductions that lead to energy savings. For example, the LMF may provide lowest-energy configuration index 3 when there are few UEs that need to be positioned. If the number of UEs increase or the obtained positioning QoS is not met, then LMF may switch the configuration, e.g., to configuration index 2 that requires more energy.

As mentioned above, in some embodiments, a UE can be similarly constrained in selection among these configuration indices. For example, if the UE has been provided a configuration associated with index 3 (lowest energy), then the UE may be allowed only allowed to request configuration index 2. After being provided the configuration associated with index 2, if the UE is unable to fulfill certain requirements and/or conditions with this configuration, the UE is then allowed to request configuration index 1 (highest energy).

In some embodiments, the LMF may configure the UE with the conditions and/or requirements the regulate the UE's requests. For example, the LMF can provide a positioning error or accuracy threshold (e.g., 50m), a positioning latency threshold (e.g., 10s), etc. Such thresholds can be provided/used individually or in various combinations. Based on these rules and thresholds, the network can balance UE positioning requirements with network energy consumption, interference, etc. associated with increased PRS transmission.

In some embodiments, the LMF (optionally in conjunction with gNBs) may associate a differentiation attribute or characteristic with the pre-defined PRS configurations. In other words, the LMF can indicate an attribute or characteristics that was used to differentiate the pre-defined PRS configurations. Example differentiation characteristics include QoS-latency, QoS-accuracy, pathloss (or radio conditions), PRS-overhead (or energy savings), etc. The LMF can indicate this differentiation characteristic to UEs, which can base their configuration index selections for on-demand PRS requests on the differentiation characteristic.

Figure 11 shows an ASN.1 data structure for an exemplary *OnDemand-PRS-ClassificationCriteria* field with different enumerated values for differentiation characteristics, according to these embodiments. In addition to the characteristics discussed above, Figure 11 includes an enumerated value of "areaSpecific", which indicates that a configuration is valid for an area and when UE moves out of the area, it may request a new configuration.

In some embodiments, the differentiation characteristic alternatives can be associated with different UE selection rules and/or different selection thresholds. For example, when differentiation characteristic A is used, the UE may be allowed to request configuration indices in any order, while when differentiation characteristic B is used, the UE may be constrained to request indices in a fixed order (e.g., ascending or descending, as discussed above).

In some embodiments, the LMF can send an NRPPa message to request the gNB to modify its current DL-PRS transmission configuration to a different one of the pre-configured PRS configurations. In some embodiments, an existing *Assistance Information Control* message can be used for this purpose. In other embodiments, a newly-defined PRS MODIFICATION REQUEST message can be used modify an on-going PRS transmission for a specific set of TRPs or entire network. Figure 12 shows a signal flow between a positioning node (e.g., LMF) and a RAN node (e.g., gNB) according to these embodiments. As shown in Figure 12, the RAN node responds to the positioning node with a newly-defined PRS MODIFICATION RESPONSE message. Tables 2 and 3 below provide exemplary contents of PRS MODIFICATION REQUEST and PRS MODIFICATION RESPONSE messages, respectively. For example, messages with these contents can be added to 3GPP TS 38.455 (v16.3.0).

**Table 2.**

| **IE/Group Name** | | | **Pres** . | **Range** | **IE type/ref.** | **Semantics description** |
|---|---|---|---|---|---|---|
| Message Type | | | M | | 9.2.3 | |
| NRPPa Transaction ID | | | M | | 9.2.4 | |
| **TRP List** | | | | *0 ..1* | | |
| | **>TRP Item** | | | *1 .. <maxnoTRPs>* | | |
| | | >>TRP ID | M | | 9.2.24 | |
| | | **> >List of allowed PRS configurations** | | 0..1 | | |
| | | **>>> PRS configuration item** | | *1* .. *<maxnoPRSindex* > | | |
| | | >>> PRS configuration index | M | | ENUMERATED( 1,..,n) | Index of allowed PRS configuration |
| | | >>> PRS configuration | M | | | |
| | | **>>List of restricted PRS configurations** | | 0..1 | | |
| | | **>>> PRS configuration item** | | *1* .. *<maxnoPRSindex* > | | |
| | | >>> PRS configuration index | M | | ENUMERATED( 1,..,m) | Index of restricted PRS configuration |
| | | >>> PRS configuration | M | | | |

**Table 3.**

| **IE/Group Name** | | | **Pres.** | **Range** | **IE type/ref.** | **Semantics description** |
|---|---|---|---|---|---|---|
| Message Type | | | M | | 9.2.3 | |
| NRPPa Transaction ID | | | M | | 9.2.4 | |
| **TRP List** | | | | *0 ..1* | | |
| | **>TRP Item** | | | *1 .. <maxnoTRPs>* | | |
| | | >>TRP ID | M | | 9.2.24 | |
| | | >> DL-PRS Information | O | | 9.2.Y | |
| | | >> PRS configuration INDEX | O | | ENUMERATED( 1..n) | |

In some embodiments, an LMF can have a default PRS configuration that it is provided during initial deployment, e.g., by operations administration and maintenance (OAM) function. This default configuration can be used for initial signaling of on-demand PRS transmissions.

In some embodiments, the LMF can receive UE measurements (e.g., RRM or PRS beam measurements) via LPP and based on such measurements, create a database that includes a plurality of configurations for on-demand PRS transmissions. For example, the LMF can create some or all of the of configurations based on factors such as number of UEs, RRM statistics, TRP capabilities, SSB patterns, estimated reports, positioning orientation (e.g., vertical/horizontal), etc.

In some embodiments, the LMF can use machine learning (ML) to build such PRS configurations in its database. Reinforcement learning (RL) is a specific type of ML that may be beneficial for such embodiments. In RL, a model continuously interacts with its environment and is provided implicit (and sometimes delayed) feedback in the form of "reward signals". RL performs short-term reward maximization but can also make decisions that are irrational in the short-term while providing long-term gains. More generally, RL models attempt to maximize expected future reward by exploiting already existing knowledge and exploring the space of actions in different scenarios, e.g., network and/or UE configurations.

In some embodiments, when an LCS client triggers a location request and on-demand PRS is requested by the UE, the LMF fetches one of its stored PRS configurations and sends it via NRPPa signaling to one or more gNBs. Based on gNB feedback (e.g., NRPPa successful response message), the LMF updates its PRS configuration data base. In some embodiments, the LMF can also update its PRS configuration database based on UE feedback, such as positioning measurements and/or location estimates.

In some embodiments, during an on-going positioning session when DL-PRS is already being transmitted, the LMF can send an NRPPa message to gNB to modify the current PRS transmission using one of the PRS configurations from its database. This can be done, for example, using the exemplary procedure shown in Figure 12. Alternately, existing NRPPa messages can be modified for the same purpose.

Various features of the embodiments described above correspond to various operations illustrated in Figures 13-15, which show exemplary methods (e.g., procedures) for a UE, a positioning node, and a RAN node, respectively. In other words, various features of the operations described below correspond to various embodiments described above. Furthermore, the exemplary methods shown in Figures 13-15 can be used cooperatively to provide various benefits, advantages, and/or solutions to problems described herein. Although Figures 13-15 show specific blocks in particular orders, the operations of the exemplary methods can be performed in different orders than shown and can be combined and/or divided into blocks having different functionality than shown. Optional blocks or operations are indicated by dashed lines.

In particular, Figure 13 shows a method (e.g., procedure) for a UE configured for positioning in a RAN, according to various embodiments of the present disclosure. The method is performed by a UE (*e.g.*, wireless device, *etc.)* such as described elsewhere herein.

The method includes the operations of block 1310, where the UE receives the following from a positioning node associated with the RAN: a plurality of configurations for PRS transmitted by nodes of the RAN, and a corresponding plurality of configuration indices associated with the plurality of configurations. In other words, each configuration is represented by, corresponds to, and/or is associated with a configuration index, and vice versa. For example, the positioning node can be an LMF.

The method includes the operations of block 1340, where the UE determines a need for receiving PRS and selects one or more of the plurality of configurations based on one or more selection rules. The method also includes the operations of block 1350, where the UE transmits to the positioning node one or more requests for TRS transmission by the RAN. The one or more requests include the one or more configuration indices that are associated with the one or more configurations selected in block 1340.

In some embodiments, the exemplary method can also include the operations of block 1330, where the UE can receive the selection rules from the positioning node.

In various embodiments, the plurality of configurations can be differentiated from each other based on one or more of the following characteristics or parameters:
- PRS transmission periodicity;
- PRS transmission bandwidth;
- number of PRS transmission frequency layers used;
- particular PRS transmission frequency layers used;
- number of RAN nodes that transmit PRS;
- particular RAN nodes that transmit PRS;
- geographic arrangement of RAN nodes that transmit PRS;
- number of PRS resource sets per node;
- number of PRS per PRS resource set;
- energy consumption and/or signaling overhead associated with transmitting PRS according to the configuration;
- relevant geographic area;
- positioning spatial dimension;
- positioning accuracy quality of service (QoS); and
- positioning latency QoS.

In some embodiments, the exemplary method can also include the operations of block 1320, where the UE can receive, from the positioning node, an indication of the characteristics or parameters by which the plurality of configurations are differentiated. In such embodiments, selecting one or more of the plurality of configurations (e.g., in block 1340) can be based on the indicated characteristics or parameters. An example indication according to these embodiments is shown in Figure 11. In some embodiments, the exemplary method can also include the operations of block 1320, where the UE can receive the selection rules (e.g., used in block 1340) from the positioning node.

In some embodiments, the plurality of configurations include a first configuration that includes default values for configuration parameters, and one or more further configurations. Each further configuration includes only ones of the configuration parameters that have different values than the default values. In some of these embodiments, the first configuration can be received via a broadcast first SIB and the one or more further configurations can be received via a broadcast second SIB. Example SIBs were discussed above. In some of these embodiments, the first SIB indicates that the first configuration is one of the following: a default configuration, or an active configuration.

In some embodiments, each request includes one index associated with one configuration selected by the UE. In the claimed invention the selection rules include a sequential order in which the respective configurations are requested by the UE.

In other of these embodiments, the one or more requests include an initial request and one or more subsequent requests and the selection rules include: a first rule identifying a first subset of configurations that can be requested by the UE in the initial request; and a second rule identifying a second subset of configurations that can be requested by the UE in the subsequent requests. In some variants, the first subset of configurations includes a first configuration that requires lowest energy to transmit PRS and the second subset includes at least one configuration that requires more energy to transmit PRS than the first configuration.

In some examples of these variants, the selecting operations of block 1340 can include the operations of sub-blocks 1341-1343, where the UE can determine whether positioning based on PRS transmissions according to the first configuration will satisfy a positioning QoS threshold, select the first configuration when it is determined that the positioning QoS threshold will be satisfied, and select a configuration of the second subset when it is determined that the positioning QoS threshold will not be satisfied. In some cases, the positioning QoS threshold is related to accuracy and/or latency.

In other examples of these variants, the second subset includes a second configuration that requires more energy than the first configuration and a third configuration that requires more energy than the second configuration. Furthermore, the one or more subsequent requests include a first subsequent request and a second subsequent request after the first subsequent request, while the second rule identifies that the second configuration can be selected for the first subsequent request and that the third configuration can be selected for the second subsequent request.

In other embodiments, the one or more requests include a single request that includes at least two configuration indices. The selection rules include a third rule indicating one of more configuration parameters that must be common among the at least two configurations associated with the at least two configuration indices included in the single request. In some variants, the third rule indicates that at least the following parameters must be common among the at least two configurations: PRS transmission periodicity and particular RAN nodes that transmit PRS. In some of these embodiments, the exemplary method can also include the operations of block 1360, where the UE can perform positioning measurements on PRS transmitted coherently according to the at least two configurations associated with the at least two configuration indices included in the single request.

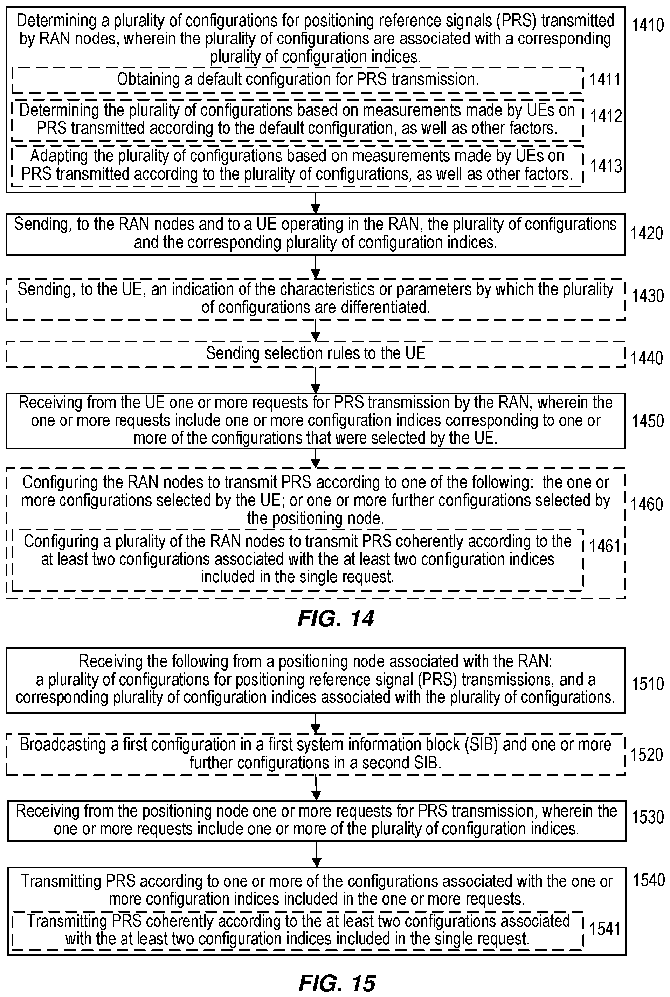

In addition, Figure 14 shows a method (e.g., procedure) for a positioning node associated with a RAN, according to various embodiments of the present disclosure. The method is performed by a positioning node (*e.g.*, LMF, E-SMLC, SUPL, *etc.)* described elsewhere herein.

The exemplary method includes the operations of block 1410, where the positioning node determines a plurality of configurations for PRS transmitted by RAN nodes. The plurality of configurations are associated with a respective plurality of configuration indices. The exemplary method also includes the operations of block 1420, where the positioning node sends, to the nodes of the RAN and to a UE operating in the RAN, the plurality of configurations and the associated plurality of configuration indices. The exemplary method also includes the operations of block 1450, where the positioning node receives from the UE one or more requests for PRS transmission by the RAN. The one or more requests include one or more of the plurality of configuration indices that are associated with one or more of the plurality of configurations that were selected by the UE.

In various embodiments, the plurality of configurations can be differentiated from each other based on any of the characteristics or parameters discussed above in relation to UE embodiments. In some embodiments, the exemplary method can also include the operations of block 1430, where the positioning node can send, to the UE, an indication of the characteristics or parameters by which the plurality of configurations are differentiated. An example indication according to these embodiments is shown in Figure 11.

In some embodiments, the plurality of configurations can include a first configuration that includes default values for configuration parameters, and one or more further configurations. Each further configuration includes only ones of the configuration parameters having different values than the default values. In some of these embodiments, the first configuration can be sent via broadcast of a first SIB by the RAN and the one or more further configurations can be sent via broadcast of a second SIB by the RAN. Example SIBs were discussed above. In some of these embodiments, the first SIB indicates that the first configuration is one of the following: a default configuration, or an active configuration.

In some embodiments, the exemplary method can also include the operations of block 1460, where the positioning node can configure the RAN nodes to transmit PRS according to one of the following: the one or more configurations indicated by the UE; or one or more further configurations selected by the positioning node.

In some of these embodiments, the exemplary method can also include the operations of block 1440, where the positioning node can send, to the UE, selection rules for selecting among the plurality of configurations.

In some of these embodiments, each request includes one index associated with one selected configuration. in the claimed invention the selection rules (e.g., sent in block 1440) include a sequential order in which the respective configurations are requested by the UE.

In other of these embodiments, the one or more requests (e.g., received in block 1450) can include an initial request and one or more subsequent requests, and the selection rules can include: a first rule identifying a first subset of configurations that can be requested by the UE in the initial request; and a second rule identifying a second subset of configurations that can be requested by the UE in the subsequent requests.

In some variants of these embodiments, the first subset includes a first configuration that requires lowest energy to transmit PRS and the second subset includes at least one configuration that requires more energy to transmit PRS than the first configuration. In some examples of these variants, the selection rules can include a positioning QoS threshold for selection between the first configuration and configurations of the second subset. In some cases, the positioning QoS threshold is related to accuracy and/or latency.

In other examples of these variants, the second subset includes a second configuration that requires more energy than the first configuration and a third configuration that requires more energy than the second configuration. Furthermore, the one or more subsequent requests include a first subsequent request and a second subsequent request after the first subsequent request. The second rule identifies that the second configuration can be selected for the first subsequent request and that the third configuration can be selected for the second subsequent request.

In other of these embodiments, the one or more requests (e.g., received in block 1450) include a single request that includes at least two configuration indices. The selection rules include a third rule indicating one of more configuration parameters that must be common among the at least two configurations identified by the at least two configuration indices included in the single request. In some variants, the third rule indicates that at least the following parameters must be common among the at least two configurations: PRS transmission periodicity and particular RAN nodes that transmit PRS. In some of these embodiments, the configuring operations of block 1460 can include the operations of sub-block 1461, where the positioning node can configure a plurality of the nodes to transmit PRS coherently according to the at least two configurations associated with the at least two configuration indices included in the single request.

In some embodiments, determining the plurality of configurations in block 1410 can include the operations of sub-blocks 1411-1412, where the positioning node can obtain a default configuration for PRS transmission (e.g., from OAM upon system initialization) and determine the plurality of configurations (e.g., sent in block 1420) based on the following:
- measurements made by UEs on PRS transmitted according to the default configuration;
- capabilities of the nodes transmitting the PRS;
- numbers of UEs operating in the RAN; and
- one or more differentiating characteristics or parameters (e.g., such as discussed above).

In some embodiments, determining the plurality of configurations in block 1410 can include the operations of sub-blocks 1413, where the positioning node can adapt the plurality of configurations based on one or more of the following:
- measurements made by UEs on PRS transmitted according to the plurality of configurations;
- updated capabilities of the nodes;
- updated numbers of UEs operating in the RAN; and
- the one or more differentiating characteristics or parameters.
For example, the positioning node can use ML (e.g., RL) techniques to adapt the plurality of configurations such as described above.

In addition, Figure 15 shows a method (e.g., procedure) for a RAN node, according to various embodiments of the present disclosure. The exemplary method is performed by a RAN node (*e.g.*, base station, eNB, gNB, ng-eNB, TRP, *etc.)* such as described elsewhere herein.

The exemplary method includes the operations of block 1510, where the RAN node receives the following from a positioning node associated with the RAN: a plurality of configurations for PRS transmitted by nodes of the RAN, and a corresponding plurality of configuration indices associated with the plurality of configurations. In other words, each configuration is represented by, corresponds to, and/or is associated with a configuration index, and vice versa. For example, the positioning node can be an LMF.

The exemplary method also includes the operations of block 1530, where the RAN node subsequently receives from the positioning node one or more requests for PRS transmission. The one or more requests include one or more of the plurality of configuration indices (e.g., received in block 1510). The exemplary method also includes the operations of block 1540, where the RAN node transmits PRS according to one or more of the configurations associated with the one or more configuration indices included in the one or more requests.

In various embodiments, the plurality of configurations can be differentiated from each other based on any of the characteristics or parameters discussed above in relation to UE embodiments.

In some embodiments, the plurality of configurations can include a first configuration that includes default values for configuration parameters, and one or more further configurations. Each further configuration includes only ones of the configuration parameters having different values than the default values. In some of these embodiments, the exemplary method can also include the operations of block 1520, where the RAN node can broadcast the first configuration in a first SIB and the one or more further configurations in a second SIB. Example SIBs were discussed above. In some of these embodiments, the first SIB indicates that the first configuration is one of the following: a default configuration, or an active configuration.

In the claimed invention, the one or more requests include an initial request and one or more subsequent requests and the plurality of configurations include: a first subset of configurations that can be requested by the UE in the initial request; and a second subset of configurations that can be requested by the UE in the subsequent requests. In some of these embodiments, the first subset of configurations includes a first configuration that requires lowest energy to transmit PRS and the second subset includes at least one configuration that requires more energy to transmit PRS than the first configuration. In some variants, the second subset includes a second configuration that requires more energy than the first configuration and a third configuration that requires more energy than the second configuration.

In other embodiments, the one or more requests include a single request that includes at least two configuration indices. At least PRS transmission periodicity is common among the at least two configurations associated with the at least two configuration indices included in the single request. In some of these embodiments, the transmitting operations of block 1540 can include the operations of sub-block 1541, where the RAN node can transmit PRS coherently according to the at least two configurations associated with the at least two configuration indices included in the single request.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

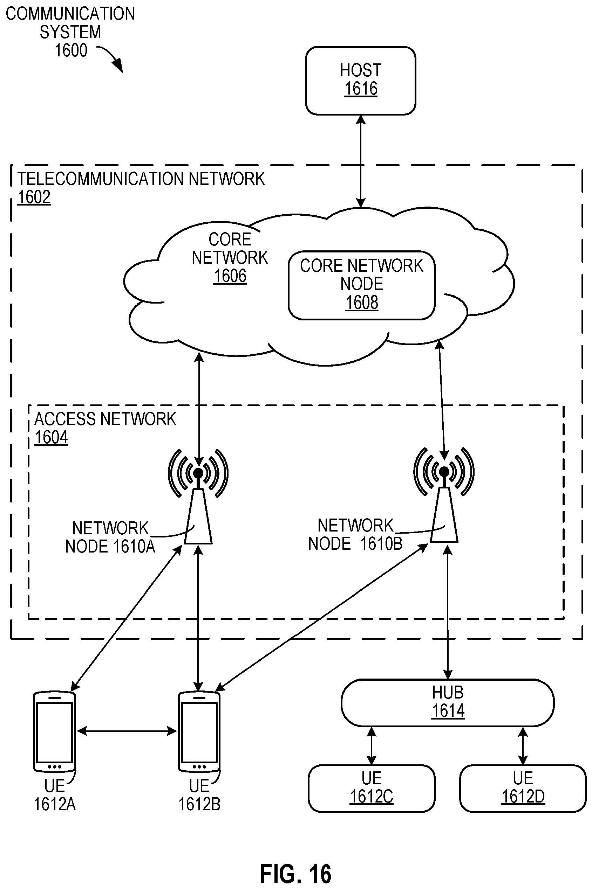

Figure 16 shows an example of a communication system 1600 in accordance with some embodiments. In this example, the communication system 1600 includes a telecommunication network 1602 that includes an access network 1604 (e.g., RAN) and a core network 1606, which includes one or more core network nodes 1608. Access network 1604 includes one or more access network nodes, such as network nodes 1610a and 1610b (one or more of which may be generally referred to as network nodes 1610), or any other similar 3GPP access node or non-3GPP access point. The network nodes 1610 facilitate direct or indirect connection of a UE, such as by connecting UEs 1612a, 1612b, 1612c, and 1612d (one or more of which may be generally referred to as UEs 1612) to the core network 1606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1600 may include any number of wired or wireless networks, network nodes, UEs, and/or any other components or systems that may facilitate or participate in the communication of data and/or signals whether via wired or wireless connections. The communication system 1600 may include and/or interface with any type of communication, telecommunication, data, cellular, radio network, and/or other similar type of system.

The UEs 1612 may be any of a wide variety of communication devices, including wireless devices arranged, configured, and/or operable to communicate wirelessly with the network nodes 1610 and other communication devices. Similarly, the network nodes 1610 are arranged, capable, configured, and/or operable to communicate directly or indirectly with the UEs 1612 and/or with other network nodes or equipment in the telecommunication network 1602 to enable and/or provide network access, such as wireless network access, and/or to perform other functions, such as administration in the telecommunication network 1602.

In the depicted example, the core network 1606 connects the network nodes 1610 to one or more hosts, such as host 1616. These connections may be direct or indirect via one or more intermediary networks or devices. In other examples, network nodes may be directly coupled to hosts. The core network 1606 includes one more core network nodes (e.g., core network node 1608) that are structured with hardware and software components. Features of these components may be substantially similar to those described with respect to the UEs, network nodes, and/or hosts, such that the descriptions thereof are generally applicable to the corresponding components of the core network node 1608. Example core network nodes include nodes that can host and/or implement any of the following network functionality: Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), Location Management Function (LMF), SUPL Location Platform (SUPL), Enhanced Serving Mobile Location Center (E-SMLC), and User Plane Function (UPF).

The host 1616 may be under the ownership or control of a service provider other than an operator or provider of the access network 1604 and/or the telecommunication network 1602, and may be operated by the service provider or on behalf of the service provider. The host 1616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1600 of Figure 16 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1602 is a cellular network that implements 3GPP standardized features. Accordingly, the telecommunications network 1602 may support network slicing to provide different logical networks to different devices that are connected to the telecommunication network 1602. For example, the telecommunications network 1602 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 1612 are configured to transmit and/or receive information without direct human interaction. For instance, a UE may be designed to transmit information to the access network 1604 on a predetermined schedule, when triggered by an internal or external event, or in response to requests from the access network 1604. Additionally, a UE may be configured for operating in single- or multi-RAT or multi-standard mode. For example, a UE may operate with any one or combination of Wi-Fi, NR, and LTE, such as in multi-radio dual connectivity (MR-DC) with the network.

In the example, the hub 1614 communicates with the access network 1604 to facilitate indirect communication between one or more UEs (e.g., UE 1612c and/or 1612d) and network nodes (e.g., network node 1610b). In some examples, the hub 1614 may be a controller, router, content source and analytics, or any of the other communication devices described herein regarding UEs. For example, the hub 1614 may be a broadband router enabling access to the core network 1606 for the UEs. As another example, the hub 1614 may be a controller that sends commands or instructions to one or more actuators in the UEs. Commands or instructions may be received from the UEs, network nodes 1610, or by executable code, script, process, or other instructions in the hub 1614. As another example, the hub 1614 may be a data collector that acts as temporary storage for UE data and, in some embodiments, may perform analysis or other processing of the data. As another example, the hub 1614 may be a content source. For example, for a UE that is a VR headset, display, loudspeaker or other media delivery device, the hub 1614 may retrieve VR assets, video, audio, or other media or data related to sensory information via a network node, which the hub 1614 then provides to the UE either directly, after performing local processing, and/or after adding additional local content. In still another example, the hub 1614 acts as a proxy server or orchestrator for the UEs, in particular in if one or more of the UEs are low energy IoT devices.

The hub 1614 may have a constant/persistent or intermittent connection to the network node 1610b. The hub 1614 may also allow for a different communication scheme and/or schedule between the hub 1614 and UEs (e.g., UE 1612c and/or 1612d), and between the hub 1614 and the core network 1606. In other examples, the hub 1614 is connected to the core network 1606 and/or one or more UEs via a wired connection. Moreover, the hub 1614 may be configured to connect to an M2M service provider over the access network 1604 and/or to another UE over a direct connection. In some scenarios, UEs may establish a wireless connection with the network nodes 1610 while still connected via the hub 1614 via a wired or wireless connection. In some embodiments, the hub 1614 may be a dedicated hub - that is, a hub whose primary function is to route communications to/from the UEs from/to the network node 1610b. In other embodiments, the hub 1614 may be a non-dedicated hub - that is, a device which is capable of operating to route communications between the UEs and network node 1610b, but which is additionally capable of operating as a communication start and/or end point for certain data channels.

Figure 17 shows a UE 1700 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE type specified and/or identified by 3GPP, including a narrow band internet of things (NB-IoT) UE, a machine type communication (MTC) UE, and/or an enhanced MTC (eMTC) UE.

A UE may support device-to-device (D2D) communication, for example by implementing sidelink (SL) communication, Dedicated Short-Range Communication (DSRC), vehicle-to-vehicle (V2V) communication, vehicle-to-infrastructure (V2I) communication, and/or vehicle-to-everything (V2X) communication. In other examples, a UE may not necessarily be associated with a specific human user who owns and/or operates the relevant device. Instead, a UE may represent a device (e.g., a smart sprinkler controller) that is intended for sale to, or operation by, a human user but which may not, or which may not initially, be associated with a specific human user. Alternatively, a UE may represent a device (e.g., a smart power meter) that is not intended for sale to, or operation by, a human user but which may be associated with or operated for the benefit of the user.

UE 1700 includes processing circuitry 1702 that is operatively coupled via a bus 1704 to an input/output interface 1706, a power source 1708, a memory 1710, a communication interface 1712, and/or any other component, or any combination thereof. Certain UEs may utilize all or a subset of the components shown in Figure 17. The level of integration between the components may vary from one UE to another UE. Further, certain UEs may contain multiple instances of a component, such as multiple processors, memories, transceivers, transmitters, receivers, etc.

The processing circuitry 1702 is configured to process instructions and data and may be configured to implement any sequential state machine operative to execute instructions stored as machine-readable computer programs in the memory 1710. The processing circuitry 1702 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1702 may include multiple central processing units (CPUs).

In the example, the input/output interface 1706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1708 is structured as a battery or battery pack. Other types of power sources, such as an external power source (e.g., an electricity outlet), photovoltaic device, or power cell, may be used. The power source 1708 may further include power circuitry for delivering power from the power source 1708 itself, and/or an external power source, to the various parts of the UE 1700 via input circuitry or an interface such as an electrical power cable. Delivering power may be, for example, for charging of the power source 1708. Power circuitry may perform any formatting, converting, or other modification to the power from the power source 1708 to make the power suitable for the respective components of the UE 1700 to which power is supplied.

The memory 1710 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1710 includes one or more application programs 1714, such as an operating system, web browser application, a widget, gadget engine, or other application, and corresponding data 1716. The memory 1710 may store, for use by the UE 1700, any of a variety of various operating systems or combinations of operating systems.

The memory 1710 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1710 may allow the UE 1700 to access instructions, application programs and the like, stored on transitory or non-transitory memory media, to off-load data, or to upload data. An article of manufacture, such as one utilizing a communication system may be tangibly embodied as or in the memory 1710, which may be or comprise a device-readable storage medium.

The processing circuitry 1702 may be configured to communicate with an access network or other network using the communication interface 1712. The communication interface 1712 may comprise one or more communication subsystems and may include or be communicatively coupled to an antenna 1722. The communication interface 1712 may include one or more transceivers used to communicate, such as by communicating with one or more remote transceivers of another device capable of wireless communication (e.g., another UE or a network node in an access network). Each transceiver may include a transmitter 1718 and/or a receiver 1720 appropriate to provide network communications (e.g., optical, electrical, frequency allocations, and so forth). Moreover, the transmitter 1718 and receiver 1720 may be coupled to one or more antennas (e.g., antenna 1722) and may share circuit components, software or firmware, or alternatively be implemented separately.

In the illustrated embodiment, communication functions of the communication interface 1712 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1712, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., an alert is sent when moisture is detected), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1700 shown in Figure 17.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 18 shows a network node 1800 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, NodeBs, eNBs, and gNBs).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., E-SMLCs, SLPs, LMFs), and/or Minimization of Drive Tests (MDTs).

The network node 1800 includes a processing circuitry 1802, a memory 1804, a communication interface 1806, and a power source 1808. The network node 1800 may be composed of multiple physically separate components (e.g., a NodeB component and a RNC component, or a BTS component and a BSC component, etc.), which may each have their own respective components. In certain scenarios in which the network node 1800 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1800 may be configured to support multiple radio access technologies (RATs). In such embodiments, some components may be duplicated (e.g., separate memory 1804 for different RATs) and some components may be reused (e.g., a same antenna 1810 may be shared by different RATs). The network node 1800 may also include multiple sets of the various illustrated components for different wireless technologies integrated into network node 1800, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1800.

The processing circuitry 1802 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1800 components, such as the memory 1804, to provide network node 1800 functionality.

In some embodiments, the processing circuitry 1802 includes a system on a chip (SOC). In some embodiments, the processing circuitry 1802 includes one or more of radio frequency (RF) transceiver circuitry 1812 and baseband processing circuitry 1814. In some embodiments, the radio frequency (RF) transceiver circuitry 1812 and the baseband processing circuitry 1814 may be on separate chips (or sets of chips), boards, or units, such as radio units and digital units. In alternative embodiments, part or all of RF transceiver circuitry 1812 and baseband processing circuitry 1814 may be on the same chip or set of chips, boards, or units.

The memory 1804 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1802. The memory 1804 may store any suitable instructions, data, or information, including a computer program, software, an application including one or more of logic, rules, code, tables, and/or other instructions (collectively denoted computer program product 1804a) capable of being executed by the processing circuitry 1802 and utilized by the network node 1800. The memory 1804 may be used to store any calculations made by the processing circuitry 1802 and/or any data received via the communication interface 1806. In some embodiments, the processing circuitry 1802 and memory 1804 is integrated.

The communication interface 1806 is used in wired or wireless communication of signaling and/or data between a network node, access network, and/or UE. As illustrated, the communication interface 1806 comprises port(s)/terminal(s) 1816 to send and receive data, for example to and from a network over a wired connection. The communication interface 1806 also includes radio front-end circuitry 1818 that may be coupled to, or in certain embodiments a part of, the antenna 1810. Radio front-end circuitry 1818 comprises filters 1820 and amplifiers 1822. The radio front-end circuitry 1818 may be connected to an antenna 1810 and processing circuitry 1802. The radio front-end circuitry may be configured to condition signals communicated between antenna 1810 and processing circuitry 1802. The radio front-end circuitry 1818 may receive digital data that is to be sent out to other network nodes or UEs via a wireless connection. The radio front-end circuitry 1818 may convert the digital data into a radio signal having the appropriate channel and bandwidth parameters using a combination of filters 1820 and/or amplifiers 1822. The radio signal may then be transmitted via the antenna 1810. Similarly, when receiving data, the antenna 1810 may collect radio signals which are then converted into digital data by the radio front-end circuitry 1818. The digital data may be passed to the processing circuitry 1802. In other embodiments, the communication interface may comprise different components and/or different combinations of components.

In certain alternative embodiments, the network node 1800 does not include separate radio front-end circuitry 1818, instead, the processing circuitry 1802 includes radio front-end circuitry and is connected to the antenna 1810. Similarly, in some embodiments, all or some of the RF transceiver circuitry 1812 is part of the communication interface 1806. In still other embodiments, the communication interface 1806 includes one or more ports or terminals 1816, the radio front-end circuitry 1818, and the RF transceiver circuitry 1812, as part of a radio unit (not shown), and the communication interface 1806 communicates with the baseband processing circuitry 1814, which is part of a digital unit (not shown).

The antenna 1810 may include one or more antennas, or antenna arrays, configured to send and/or receive wireless signals. The antenna 1810 may be coupled to the radio front-end circuitry 1818 and may be any type of antenna capable of transmitting and receiving data and/or signals wirelessly. In certain embodiments, the antenna 1810 is separate from the network node 1800 and connectable to the network node 1800 through an interface or port.

The antenna 1810, communication interface 1806, and/or the processing circuitry 1802 may be configured to perform any receiving operations and/or certain obtaining operations described herein as being performed by the network node. Any information, data and/or signals may be received from a UE, another network node and/or any other network equipment. Similarly, the antenna 1810, the communication interface 1806, and/or the processing circuitry 1802 may be configured to perform any transmitting operations described herein as being performed by the network node. Any information, data and/or signals may be transmitted to a UE, another network node and/or any other network equipment.

The power source 1808 provides power to the various components of network node 1800 in a form suitable for the respective components (e.g., at a voltage and current level needed for each respective component). The power source 1808 may further comprise, or be coupled to, power management circuitry to supply the components of the network node 1800 with power for performing the functionality described herein. For example, the network node 1800 may be connectable to an external power source (e.g., the power grid, an electricity outlet) via an input circuitry or interface such as an electrical cable, whereby the external power source supplies power to power circuitry of the power source 1808. As a further example, the power source 1808 may comprise a source of power in the form of a battery or battery pack which is connected to, or integrated in, power circuitry. The battery may provide backup power should the external power source fail.

Embodiments of the network node 1800 may include additional components beyond those shown in Figure 18 for providing certain aspects of the network node's functionality, including any of the functionality described herein and/or any functionality necessary to support the subject matter described herein. For example, the network node 1800 may include user interface equipment to allow input of information into the network node 1800 and to allow output of information from the network node 1800. This may allow a user to perform diagnostic, maintenance, repair, and other administrative functions for the network node 1800.

Figure 19 is a block diagram of a host 1900, which may be an embodiment of the host 1616 of Figure 16, in accordance with various aspects described herein. As used herein, the host 1900 may be or comprise various combinations hardware and/or software, including a standalone server, a blade server, a cloud-implemented server, a distributed server, a virtual machine, container, or processing resources in a server farm. The host 1900 may provide one or more services to one or more UEs.

The host 1900 includes processing circuitry 1902 that is operatively coupled via a bus 1904 to an input/output interface 1906, a network interface 1908, a power source 1910, and a memory 1912. Other components may be included in other embodiments. Features of these components may be substantially similar to those described with respect to the devices of previous figures, such as Figures 17 and 18, such that the descriptions thereof are generally applicable to the corresponding components of host 1900.

The memory 1912 may include one or more computer programs including one or more host application programs 1914 and data 1916, which may include user data, e.g., data generated by a UE for the host 1900 or data generated by the host 1900 for a UE. Embodiments of the host 1900 may utilize only a subset or all of the components shown. The host application programs 1914 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1914 may also provide for user authentication and licensing checks and may periodically report health, routes, and content availability to a central node, such as a device in or on the edge of a core network. Accordingly, the host 1900 may select and/or indicate a different host for over-the-top services for a UE. The host application programs 1914 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 20 is a block diagram illustrating a virtualization environment 2000 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 2000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 2002 (which may alternatively be called software instances, virtual appliances, network functions, virtual nodes, virtual network functions, etc.) are run in the virtualization environment 2000 to implement some of the features, functions, and/or benefits of some of the embodiments disclosed herein.

Hardware 2004 includes processing circuitry, memory that stores software and/or instructions (collectively denoted computer program product 2004a) executable by hardware processing circuitry, and/or other hardware devices as described herein, such as a network interface, input/output interface, and so forth. Software may be executed by the processing circuitry to instantiate one or more virtualization layers 2006 (also referred to as hypervisors or virtual machine monitors (VMMs)), provide VMs 2008a and 2008b (one or more of which may be generally referred to as VMs 2008), and/or perform any of the functions, features and/or benefits described in relation with some embodiments described herein. The virtualization layer 2006 may present a virtual operating platform that appears like networking hardware to the VMs 2008.

The VMs 2008 comprise virtual processing, virtual memory, virtual networking or interface and virtual storage, and may be run by a corresponding virtualization layer 2006. Different embodiments of the instance of a virtual appliance 2002 may be implemented on one or more of VMs 2008, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 2008 may be a software implementation of a physical machine that runs programs as if they were executing on a physical, non-virtualized machine. Each of the VMs 2008, and that part of hardware 2004 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 2008 on top of the hardware 2004 and corresponds to the application 2002.

Hardware 2004 may be implemented in a standalone network node with generic or specific components. Hardware 2004 may implement some functions via virtualization. Alternatively, hardware 2004 may be part of a larger cluster of hardware (e.g., such as in a data center or CPE) where many hardware nodes work together and are managed via management and orchestration 2010, which, among others, oversees lifecycle management of applications 2002. In some embodiments, hardware 2004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 2012 which may alternatively be used for communication between hardware nodes and radio units.

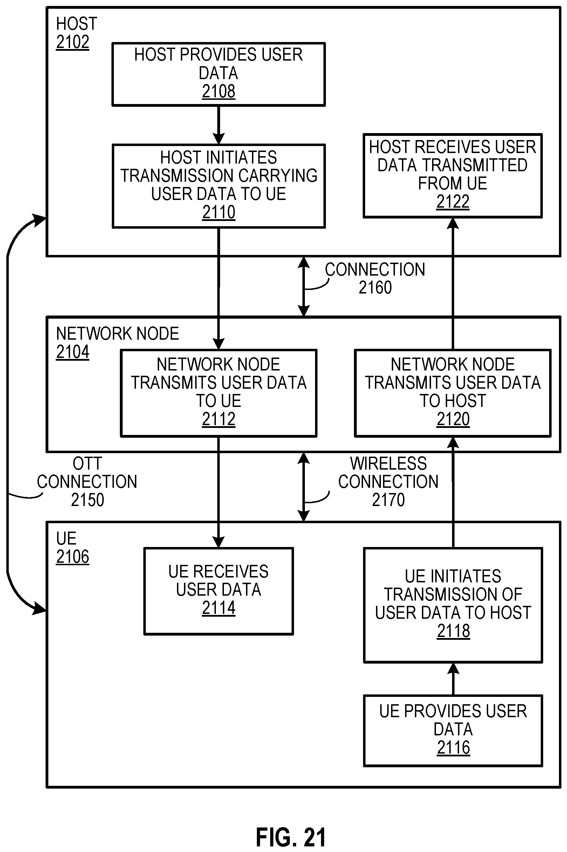

Figure 21 shows a communication diagram of a host 2102 communicating via a network node 2104 with a UE 2106 over a partially wireless connection in accordance with some embodiments. Example implementations, in accordance with various embodiments, of the UE (such as a UE 1612a of Figure 16 and/or UE 1700 of Figure 17), network node (such as network node 1610a of Figure 16 and/or network node 1800 of Figure 18), and host (such as host 1616 of Figure 16 and/or host 1900 of Figure 19) discussed in the preceding paragraphs will now be described with reference to Figure 21.

Like host 1900, embodiments of host 2102 include hardware, such as a communication interface, processing circuitry, and memory. The host 2102 also includes software, which is stored in or accessible by the host 2102 and executable by the processing circuitry. The software includes a host application that may be operable to provide a service to a remote user, such as the UE 2106 connecting via an over-the-top (OTT) connection 2150 extending between the UE 2106 and host 2102. In providing the service to the remote user, a host application may provide user data which is transmitted using the OTT connection 2150.

The network node 2104 includes hardware enabling it to communicate with the host 2102 and UE 2106. The connection 2160 may be direct or pass through a core network (like core network 1606 of Figure 16) and/or one or more other intermediate networks, such as one or more public, private, or hosted networks. For example, an intermediate network may be a backbone network or the Internet.

The UE 2106 includes hardware and software, which is stored in or accessible by UE 2106 and executable by the UE's processing circuitry. The software includes a client application, such as a web browser or operator-specific "app" that may be operable to provide a service to a human or non-human user via UE 2106 with the support of the host 2102. In the host 2102, an executing host application may communicate with the executing client application via the OTT connection 2150 terminating at the UE 2106 and host 2102. In providing the service to the user, the UE's client application may receive request data from the host's host application and provide user data in response to the request data. The OTT connection 2150 may transfer both the request data and the user data. The UE's client application may interact with the user to generate the user data that it provides to the host application through the OTT connection 2150.

The OTT connection 2150 may extend via a connection 2160 between the host 2102 and the network node 2104 and via a wireless connection 2170 between the network node 2104 and the UE 2106 to provide the connection between the host 2102 and the UE 2106. The connection 2160 and wireless connection 2170, over which the OTT connection 2150 may be provided, have been drawn abstractly to illustrate the communication between the host 2102 and the UE 2106 via the network node 2104, without explicit reference to any intermediary devices and the precise routing of messages via these devices.

As an example of transmitting data via the OTT connection 2150, in step 2108, the host 2102 provides user data, which may be performed by executing a host application. In some embodiments, the user data is associated with a particular human user interacting with the UE 2106. In other embodiments, the user data is associated with a UE 2106 that shares data with the host 2102 without explicit human interaction. In step 2110, the host 2102 initiates a transmission carrying the user data towards the UE 2106. The host 2102 may initiate the transmission responsive to a request transmitted by the UE 2106. The request may be caused by human interaction with the UE 2106 or by operation of the client application executing on the UE 2106. The transmission may pass via the network node 2104, in accordance with the teachings of the embodiments described throughout this disclosure. Accordingly, in step 2112, the network node 2104 transmits to the UE 2106 the user data that was carried in the transmission that the host 2102 initiated, in accordance with the teachings of the embodiments described throughout this disclosure. In step 2114, the UE 2106 receives the user data carried in the transmission, which may be performed by a client application executed on the UE 2106 associated with the host application executed by the host 2102.

In some examples, the UE 2106 executes a client application which provides user data to the host 2102. The user data may be provided in reaction or response to the data received from the host 2102. Accordingly, in step 2116, the UE 2106 may provide user data, which may be performed by executing the client application. In providing the user data, the client application may further consider user input received from the user via an input/output interface of the UE 2106. Regardless of the specific manner in which the user data was provided, the UE 2106 initiates, in step 2118, transmission of the user data towards the host 2102 via the network node 2104. In step 2120, in accordance with the teachings of the embodiments described throughout this disclosure, the network node 2104 receives user data from the UE 2106 and initiates transmission of the received user data towards the host 2102. In step 2122, the host 2102 receives the user data carried in the transmission initiated by the UE 2106.

One or more of the various embodiments improve the performance of OTT services provided to the UE 2106 using the OTT connection 2150, in which the wireless connection 2170 forms the last segment. More precisely, embodiments described herein can provide flexible and efficient techniques to support on-demand PRS transmission when network conditions change. Embodiments can also be used to select PRS configurations that are suitable for not just one but many UEs, which provides more efficient UE positioning based on DL PRS transmissions. Embodiments can also reduce energy consumption of RAN nodes by avoiding transmissions of PRS resources that are not needed. In this manner, embodiments can improve the delivery of positioning-based OTT services by a wireless network, which increases the value of such services to end users and OTT service providers.

In an example scenario, factory status information may be collected and analyzed by the host 2102. As another example, the host 2102 may process audio and video data which may have been retrieved from a UE for use in creating maps. As another example, the host 2102 may collect and analyze real-time data to assist in controlling vehicle congestion (e.g., controlling traffic lights). As another example, the host 2102 may store surveillance video uploaded by a UE. As another example, the host 2102 may store or control access to media content such as video, audio, VR or AR which it can broadcast, multicast or unicast to UEs. As other examples, the host 2102 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 2150 between the host 2102 and UE 2106, in response to variations in the measurement results. The measurement procedure and/or the network functionality for reconfiguring the OTT connection may be implemented in software and hardware of the host 2102 and/or UE 2106. In some embodiments, sensors (not shown) may be deployed in or in association with other devices through which the OTT connection 2150 passes; the sensors may participate in the measurement procedure by supplying values of the monitored quantities exemplified above, or supplying values of other physical quantities from which software may compute or estimate the monitored quantities. The reconfiguring of the OTT connection 2150 may include message format, retransmission settings, preferred routing etc.; the reconfiguring need not directly alter the operation of the network node 2104. Such procedures and functionalities may be known and practiced in the art. In certain embodiments, measurements may involve proprietary UE signaling that facilitates measurements of throughput, propagation times, latency and the like, by the host 2102. The measurements may be implemented in that software causes messages to be transmitted, in particular empty or 'dummy' messages, using the OTT connection 2150 while monitoring propagation times, errors, etc.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method for a user equipment, UE, configured for positioning in a radio access network, RAN, the method comprising:
receiving (1310) the following from a positioning node associated with the RAN:
a plurality of configurations for positioning reference signals, PRS, transmitted by the RAN, and
a corresponding plurality of configuration indices associated with the plurality of configurations;
determining (1340) a need for receiving PRS and selecting one or more of the plurality of configurations based on one or more selection rules; and
transmitting (1350), to the positioning node, one or more requests for PRS transmission by the RAN, wherein the one or more requests include the one or more configuration indices that are associated with the selected one or more configurations, and wherein the selection rules include a sequential order in which the respective configurations can be requested by the UE.

2. The method of claim 1, wherein the plurality of configurations are differentiated from each other based on one or more of the following characteristics or parameters:
PRS transmission periodicity;
PRS transmission bandwidth;
number of PRS transmission frequency layers used;
particular PRS transmission frequency layers used;
number of RAN nodes that transmit PRS;
particular RAN nodes that transmit PRS;
geographic arrangement of RAN nodes that transmit PRS;
number of PRS resource sets per node;
number of PRS per PRS resource set;
energy consumption and/or signaling overhead associated with transmitting PRS according to the configuration;
relevant geographic area;
positioning spatial dimension;
positioning accuracy quality of service, QoS; and
positioning latency QoS; and, optionally,
the method further comprising receiving (1320), from the positioning node, an indication of the characteristics or parameters by which the plurality of configurations are differentiated, wherein selecting one or more of the plurality of configurations is based on the indicated characteristics or parameters.

3. The method of claim 1 or 2, wherein the plurality of configurations include:
a first configuration that includes default values for configuration parameters; and
one or more further configurations, with each further configuration including only ones of the configuration parameters that have different values than the default values; and, optionally,
wherein:
the first configuration is received via a broadcast first system information block, SIB;
the one or more further configurations are received via a broadcast second SIB; and
the first SIB indicates that the first configuration is one of the following: a default configuration, or a currently active configuration.

4. The method of any of claims 1-3, wherein each request includes one index associated with one selected configuration, and wherein the one or more requests include an initial request and one or more subsequent requests, and the selection rules include:
a first rule identifying a first subset of configurations that can be requested by the UE in the initial request; and
a second rule identifying a second subset of configurations that can be requested by the UE in the subsequent requests, wherein, optionally:
the first subset of configurations includes a first configuration that requires lowest energy to transmit PRS; and
the second subset includes at least one configuration that requires more energy to transmit PRS than the first configuration; and, wherein, further optionally,
{i} selecting (1340) one or more of the plurality of configurations based on one or more selection rules comprises:
determining (1341) whether positioning based on PRS transmissions according to the first configuration will satisfy a positioning quality of service, QoS, threshold;
selecting (1342 the first configuration when it is determined that the positioning QoS threshold will be satisfied; and
selecting (1341) a configuration of the second subset when it is determined that the positioning QoS threshold will not be satisfied,
wherein the positioning QoS threshold is related to one or more of the following: accuracy and latency; or
{ii} the second subset includes a second configuration that requires more energy than the first configuration and a third configuration that requires more energy than the second configuration;
the one or more subsequent requests include a first subsequent request and a second subsequent request after the first subsequent request; and
the second rule identifies that the second configuration can be selected for the first subsequent request and that the third configuration can be selected for the second subsequent request.

5. The method of any of claims 1-3, wherein:
the one or more requests include a single request that includes at least two configuration indices; and
the selection rules include a third rule indicating one of more configuration parameters that must be common among the at least two configurations associated with the at least two configuration indices included in the single request.

6. The method of claim 5, wherein the third rule indicates that at least the following parameters must be common among the at least selected configurations: PRS transmission periodicity, and particular RAN nodes that transmit PRS; and/or the method further comprising performing (1360) positioning measurements on PRS transmitted coherently according to the at least two configurations associated with the at least two configuration indices included in the single request.

7. A method for a positioning node associated with a radio access network, RAN, the method comprising:
determining (1410) a plurality of configurations for positioning reference signals, PRS, transmitted by RAN nodes, wherein the plurality of configurations are associated with a corresponding plurality of configuration indices;
sending (1420), to the RAN nodes and to a user equipment, UE, operating in the RAN, the plurality of configurations and the associated plurality of configuration indices; and
receiving (1450) from the UE one or more requests for PRS transmission by the RAN, wherein the one or more requests include one or more of the plurality of configuration indices that are associated with one or more of the plurality of configurations that were selected by the UE based on one or more selection rules, wherein the selection rules include a sequential order in which the respective configurations can be requested by the UE.

8. The method of claim 7, wherein the plurality of configurations are differentiated from each other based on one or more of the following characteristics or parameters:
PRS transmission periodicity;
PRS transmission bandwidth;
number of PRS transmission frequency layers used;
particular PRS transmission frequency layers used;
number of RAN nodes that transmit PRS;
particular RAN nodes that transmit PRS;
geographic arrangement of RAN nodes that transmit PRS;
number of PRS resource sets per node;
number of PRS per PRS resource set;
energy consumption and/or signaling overhead associated with transmitting PRS according to the configuration;
relevant geographic area;
positioning spatial dimension;
positioning accuracy quality of service, QoS; and
positioning latency QoS; and, optionally,
the method further comprising sending (1430), to the UE, an indication of the characteristics or parameters by which the plurality of configurations are differentiated.

9. The method of any of claims 7-8, wherein the plurality of configurations include:
a first configuration that includes default values for configuration parameters; and
one or more further configurations, with each further configuration including only ones of the configuration parameters having different values than the default values; and, optionally,
wherein:
the first configuration is sent via broadcast of a first system information block, SIB, by the RAN; and
the one or more further configurations are sent via broadcast of a second SIB by the RAN; and
the first SIB indicates that the first configuration is one of the following: a default configuration, or a currently active configuration.

10. The method of any of claims 7-9, further comprising configuring (1460) the RAN nodes to transmit PRS according to one of the following: the one or more configurations selected by the UE, or one or more further configurations selected by the positioning node.

11. The method of claim 10, further comprising sending (1440), to the UE, selection rules for selecting among the plurality of configurations, wherein, optionally, each request includes one index associated with one configuration selected by the UE.

12. The method of claim 11, wherein the one or more requests include an initial request and one or more subsequent requests, and the selection rules include:
a first rule identifying a first subset of configurations that can be requested by the UE in the initial request; and
a second rule identifying a second subset of configurations that can be requested by the UE in the subsequent requests, wherein, optionally:
the first subset includes a first configuration that requires lowest energy to transmit PRS; and
the second subset includes at least one configuration that requires more energy to transmit PRS than the first configuration, and
wherein, further optionally:
{i} the selection rules include a positioning quality of service, QoS, threshold for selection between the first configuration and configurations of the second subset; and
the positioning QoS threshold is related to one or more of the following: accuracy and latency; or
{ii} the second subset includes a second configuration that requires more energy than the first configuration and a third configuration that requires more energy than the second configuration;
the one or more subsequent requests include a first subsequent request and a second subsequent request after the first subsequent request; and
the second rule identifies that the second configuration can be selected for the first subsequent request and that the third configuration can be selected for the second subsequent request.

13. The method of any of claims 7-12, wherein determining (1410) the plurality of configurations comprises:
obtaining (1411) a default configuration for PRS transmission; and
determining (1412) the plurality of configurations based on the following:
measurements made by UEs on PRS transmitted according to the default configuration;
capabilities of the nodes;
numbers of UEs operating in the RAN; and
one or more differentiating characteristics or parameters; and
wherein, optionally, determining (1410) the plurality of configurations comprises adapting (1413) the plurality of configurations based on one or more of the following:
measurements made by UEs on PRS transmitted according to the plurality of configurations;
updated capabilities of the nodes;
updated numbers of UEs operating in the RAN; and
the one or more differentiating characteristics or parameters.

14. A method for a radio access network, RAN, node, the method comprising:
receiving (1510) the following from a positioning node associated with the RAN:
a plurality of configurations for positioning reference signal, PRS, transmissions, and
a corresponding plurality of configuration indices associated with the plurality of configurations;
subsequently receiving (1530) from the positioning node one or more requests for PRS transmission, wherein the one or more requests include one or more of the plurality of configuration indices; and
transmitting (1540) PRS according to one or more of the configurations associated with the one or more configuration indices included in the one or more requests;
wherein the one or more requests include an initial request and one or more subsequent requests, and the configurations include:
a first subset of configurations that can be requested by a UE in the initial request; and
a second subset of configurations that can be requested by the UE in the subsequent requests.

15. The method of claim 14, wherein the plurality of configurations are differentiated from each other based on one or more of the following characteristics or parameters:
PRS transmission periodicity;
PRS transmission bandwidth;
number of PRS transmission frequency layers used;
particular PRS transmission frequency layers used;
number of RAN nodes that transmit PRS;
particular RAN nodes that transmit PRS;
geographic arrangement of RAN nodes that transmit PRS;
number of PRS resource sets per node;
number of PRS per PRS resource set;
energy consumption and/or signaling overhead associated with transmitting PRS according to the configuration;
relevant geographic area;
positioning spatial dimension;
positioning accuracy quality of service, QoS; and
positioning latency QoS.

16. The method of any of claims 14-15, wherein the plurality of configurations include:
a first configuration that includes default values for configuration parameters; and
one or more further configurations, with each further configuration including only ones of the configuration parameters having different values than the default values; and, optionally,
wherein:
the method further comprises broadcasting (1520) the first configuration in a first system information block, SIB, and the one or more further configurations in a second SIB; and
the first SIB indicates that the first configuration is one of the following: a default configuration, or a currently active configuration.

17. The method of claim 14, wherein:
the first subset of configurations includes a first configuration that requires lowest energy to transmit PRS; and
the second subset includes at least one configuration that requires more energy to transmit PRS than the first configuration;
and, optionally, wherein:
the second subset includes a second configuration that requires more energy than the first configuration and a third configuration that requires more energy than the second configuration.

18. A user equipment, UE (205, 310, 410, 1612, 1700, 2106) configured for positioning in a radio access network, RAN (199, 299, 420, 1604), the UE comprising:
communication interface circuitry (1710) configured to communicate with RAN nodes (100, 210, 220, 421, 422, 610, 1210, 1610, 1800, 2002, 2104) and with a positioning node (440, 450, 460, 1220, 1800, 2002) associated with the RAN; and
processing circuitry (1702) operatively coupled to the communication interface circuitry,
wherein the processing circuitry and the communication interface circuitry are further configured to perform the method of any of claims 1-6.

19. A positioning node (440, 450, 460, 1220, 1800, 2002) configured to operate with a radio access network, RAN (199, 299, 420, 1604), the positioning node comprising:
communication interface circuitry (441, 451, 461, 1806, 2004) configured to communicate with RAN nodes (100, 210, 220, 421, 422, 610, 1210, 1610, 1800, 2002, 2104) and with a user equipment, UE (205, 310, 410, 1612, 1700, 2106) operating in the RAN; and
processing circuitry (442, 452, 462, 1802, 2004) operatively coupled to the communication interface circuitry,
wherein the processing circuitry and the communication interface circuitry are further
configured to perform the method of any of claims 7-13.

20. A radio access network, RAN, node (100, 210, 220, 421, 422, 610, 1210, 1610, 1800, 2002, 2104) comprising:
communication interface circuitry (1806, 2004) configured to communicate with user equipment, UEs (205, 310, 410, 1612, 1700, 2106) and with a positioning node (440, 450, 460, 1220, 1800, 2002) associated with the RAN; and
processing circuitry (1802, 2004) operatively coupled to the communication interface circuitry,
wherein the processing circuitry and the communication interface circuitry are further configured to perform the method of any of claims 14-17.

## Patentansprüche

1. Verfahren für eine Benutzereinrichtung, UE, die zur Positionsbestimmung in einem Funkzugangsnetzwerk, RAN, konfiguriert ist, wobei das Verfahren Folgendes umfasst:
Empfangen (1310) von Folgenden von einem Positionsbestimmungsknoten, der mit dem RAN assoziiert ist:
eine Mehrzahl von Konfigurationen für Positionsbestimmungsreferenzsignale, PRS, die von dem RAN gesendet werden, und
eine entsprechende Mehrzahl von Konfigurationsindizes, die mit der Mehrzahl von Konfigurationen assoziiert ist;
Bestimmen (1340) einer Notwendigkeit des Empfangens von PRS und Auswählen einer oder mehrerer der Mehrzahl von Konfigurationen basierend auf einer oder mehreren Auswahlregeln; und
Übertragen (1350) einer oder mehrerer Anforderungen zur PRS-Übertragung durch das RAN an den Positionsbestimmungsknoten, wobei die eine oder die mehreren Anforderungen den einen oder die mehreren Konfigurationsindizes umfassen, die mit der einen oder den mehreren ausgewählten Konfigurationen assoziiert sind, und wobei die Auswahlregeln eine Reihenfolge umfassen, in der die jeweiligen Konfigurationen von der UE angefordert werden können.

2. Verfahren nach Anspruch 1, wobei die Mehrzahl von Konfigurationen basierend auf einem oder mehreren der folgenden Merkmale oder Parameter voneinander unterschieden wird:
PRS-Übertragungsperiodizität;
PRS-Übertragungsbandbreite;
Anzahl der PRS-Übertragungsfrequenzschichten, die verwendet werden;
spezifische PRS-Übertragungsfrequenzschichten, die verwendet werden;
Anzahl von RAN-Knoten, die PRS übertragen;
spezifische RAN-Knoten, die PRS übertragen;
geografische Anordnung von RAN-Knoten, die PRS übertragen;
Anzahl von PRS-Ressourcensätzen pro Knoten;
Anzahl von PRS pro PRS-Ressourcensatz;
Energieverbrauch und/oder Signalisierungsaufwand, der mit dem Übertragen von PRS gemäß der Konfiguration assoziiert ist;
relevantes geografisches Gebiet;
räumliche Dimension der Positionsbestimmung;
Dienstgüte, QoS, der Positionsbestimmungsgenauigkeit; und
QoS der Positionsbestimmungslatenz; und optional wobei das Verfahren ferner Empfangen (1320) einer Angabe der Merkmale oder Parameter, durch die die Mehrzahl von Konfigurationen unterschieden wird, von dem Positionsbestimmungsknoten umfasst, wobei das Auswählen einer oder mehrerer der Mehrzahl von Konfigurationen auf den angegebenen Merkmalen oder Parametern basiert.

3. Verfahren nach Anspruch 1 oder 2, wobei die Mehrzahl von Konfigurationen Folgendes umfasst:
eine erste Konfiguration, die Standardwerte für Konfigurationsparameter umfasst; und
eine oder mehrere weitere Konfigurationen, wobei jede weitere Konfigurationen nur diejenigen der Konfigurationsparameter umfasst, die andere Werte als die Standardwerte aufweisen; und optional
wobei:
die erste Konfiguration über Rundsendung eines ersten Systeminformationsblocks, SIB, empfangen wird;
die eine oder die mehreren weiteren Konfigurationen über Rundsendung eines zweiten SIB empfangen werden; und
der erste SIB angibt, dass die erste Konfiguration eine von folgenden ist: eine Standardkonfiguration oder eine gegenwärtig aktive Konfiguration.

4. Verfahren nach einem der Ansprüche 1-3, wobei jede Anforderung einen Index umfasst, der mit einer ausgewählten Konfiguration assoziiert ist, und wobei die eine oder die mehreren Anforderungen eine anfängliche Anforderung und eine oder mehrere nachfolgenden Anforderungen umfassen und die Auswahlregeln folgende umfassen:
eine erste Regel, die eine erste Teilmenge von Konfigurationen identifiziert, die von der UE in der anfänglichen Anforderung angefordert werden können;
eine zweite Regel, die eine zweite Teilmenge von Konfigurationen identifiziert, die von der UE in den nachfolgenden Anforderungen angefordert werden können;
wobei optional:
die erste Teilmenge von Konfigurationen eine erste Konfiguration umfasst, die die geringste Energie zum Übertragen von PRS benötigt; und
die zweite Teilmenge mindestens eine Konfiguration umfasst, die mehr Energie zum Übertragen von PRS als die erste Konfiguration benötigt; und wobei ferner optional:
{i} das Auswählen (1340) einer oder mehrerer der Mehrzahl von Konfigurationen basierend auf einer oder mehreren Auswahlregeln Folgendes umfasst:
Bestimmen (1341), ob die Positionsbestimmung basierend auf PRS-Übertragung gemäß der ersten Konfiguration einen Schwellenwert einer Positionsbestimmungsdienstqualität, Positionsbestimmungs-QoS, einhält;
Auswählen (1342) der ersten Konfiguration, wenn bestimmt wird, dass der Schwellenwert der Positionsbestimmungs-QoS eingehalten wird; und
Auswählen (1341) einer Konfiguration der zweiten Teilmenge, wenn bestimmt wird, dass der Schwellenwert der Positionsbestimmungs-QoS nicht eingehalten wird,
wobei der Schwellenwert der Positionsbestimmungs-QoS mit einem oder mehreren von Folgenden in Beziehung steht: Genauigkeit und Latenz; oder
{ii} die zweite Teilmenge eine zweite Konfiguration, die mehr Energie als die erste Konfiguration benötigt, und eine dritte Konfiguration umfasst,
die mehr Energie als die zweite Konfiguration benötigt;
wobei die eine oder die mehreren nachfolgenden Anforderungen eine erste nachfolgende und eine zweite nachfolgende Anforderung nach der ersten nachfolgenden Anforderung umfassen; und
die zweite Regel identifiziert, dass die zweite Konfiguration für die erste nachfolgende Anforderung ausgewählt werden kann und dass die dritte Konfiguration für die zweite nachfolgende Anforderung ausgewählt werden kann.

5. Verfahren nach einem der Ansprüche 1-3, wobei:
die eine oder die mehreren Anforderungen eine einzige Anforderung umfassen, die mindestens zwei Konfigurationsindizes umfasst; und
die Auswahlregeln eine dritte Regel umfassen, die einen oder mehrere Konfigurationsparameter angibt, die den mindestens zwei Konfigurationen, die mit den mindestens zwei Konfigurationsindizes assoziiert sind, die in der einzigen Anforderung umfasst sind, gemeinsam sein müssen.

6. Verfahren nach Anspruch 5, wobei die dritte Regel angibt, dass mindestens die folgenden Parameter den mindestens ausgewählten Konfigurationen gemeinsam sein müssen: PRS-Übertragungsperiodizität; und spezifische RAN-Knoten, die PRS übertragen; und/oder das Verfahren ferner Durchführen (1360) von Positionsbestimmungsmessungen an PRS umfasst, die kohärent gemäß den mindestens zwei Konfigurationen übertragen werden, die mit den mindestens zwei Konfigurationen assoziiert sind, die in der einzigen Anforderung umfasst sind.

7. Verfahren für einen Positionsbestimmungsknoten, der mit einem Funkzugangsnetzwerk, RAN, assoziiert ist, wobei das Verfahren Folgendes umfasst:
Bestimmen (1410) einer Mehrzahl von Konfigurationen für Positionsbestimmungsreferenzsignale, PRS, die von RAN-Knoten gesendet werden, wobei die Mehrzahl von Konfigurationen mit einer entsprechenden Mehrzahl von Konfigurationsindizes assoziiert ist;
Senden (1420) der Mehrzahl von Konfigurationen und der zugehörigen Mehrzahl von Konfigurationsindizes an die RAN-Knoten und an eine Benutzereinrichtung, UE, die in dem RAN operiert; und
Empfangen (1450) einer oder mehrerer Anforderungen zur PRS-Übertragung durch das RAN von der UE, wobei die eine oder die mehreren Anforderungen einen oder mehrere der Mehrzahl von Konfigurationsindizes umfassen, die mit einer oder mehreren der Mehrzahl von Konfigurationen assoziiert sind, die von der UE basierend auf einer oder mehreren Auswahlregeln ausgewählt wurden, wobei die Auswahlregeln eine Reihenfolge umfassen, in der die jeweiligen Konfigurationen von der UE angefordert werden können.

8. Verfahren nach Anspruch 7, wobei die Mehrzahl von Konfigurationen basierend auf einem oder mehreren der folgenden Merkmale oder Parameter voneinander unterschieden wird:
PRS-Übertragungsperiodizität;
PRS-Übertragungsbandbreite;
Anzahl der PRS-Übertragungsfrequenzschichten, die verwendet werden;
spezifische PRS-Übertragungsfrequenzschichten, die verwendet werden;
Anzahl von RAN-Knoten, die PRS übertragen;
spezifische RAN-Knoten, die PRS übertragen;
geografische Anordnung von RAN-Knoten, die PRS übertragen;
Anzahl von PRS-Ressourcensätzen pro Knoten;
Anzahl von PRS pro PRS-Ressourcensatz;
Energieverbrauch und/oder Signalisierungsaufwand, der mit dem Übertragen von PRS gemäß der Konfiguration assoziiert ist;
relevantes geografisches Gebiet;
räumliche Dimension der Positionsbestimmung;
Dienstqualität, QoS, der Positionsbestimmungsgenauigkeit; und
QoS der Positionsbestimmungslatenz; und optional wobei das Verfahren ferner Senden (1430) einer Angabe der Merkmale und Parameter, durch die die Mehrzahl von Konfigurationen unterschieden wird, an die UE umfasst.

9. Verfahren nach einem der Ansprüche 7-8, wobei die Mehrzahl von Konfigurationen folgende umfasst:
eine erste Konfiguration, die Standardwerte für Konfigurationsparameter umfasst; und
eine oder mehrere weitere Konfigurationen, wobei jede weitere Konfigurationen nur diejenigen der Konfigurationsparameter umfasst, die andere Werte als die Standardwerte aufweisen; und optional
wobei:
die erste Konfiguration über Rundsendung eines ersten Systeminformationsblocks, SIB, durch das RAN gesendet wird;
die eine oder die mehreren weiteren Konfigurationen über Rundsendung eines zweiten SIB gesendet werden; und
der erste SIB angibt, dass die erste Konfiguration eine von folgenden ist: eine Standardkonfiguration oder eine gegenwärtig aktive Konfiguration.

10. Verfahren nach einem der Ansprüche 7-9, ferner umfassend Konfigurieren (1460) der RAN-Knoten zum Übertragen von PRS gemäß einem von Folgenden: der einen oder den mehreren Konfigurationen, die von der UE ausgewählt werden, oder einer oder mehreren weiteren Konfigurationen, die von dem Positionsbestimmungsknoten ausgewählt werden.

11. Verfahren nach Anspruch 10, ferner umfassend Senden (1440) von Auswahlregeln zum Auswählen unter der Mehrzahl von Konfigurationen an die UE, wobei optional jede Anforderung einen Index umfasst, der mit einer Konfiguration assoziiert ist, die von der UE ausgewählt wird.

12. Verfahren nach Anspruch 11, wobei die eine oder die mehreren Anforderungen eine anfängliche Anforderung und eine oder mehrere nachfolgenden Anforderungen umfassen und die Auswahlregeln folgende umfassen:
eine erste Regel, die eine erste Teilmenge von Konfigurationen identifiziert, die von der UE in der anfänglichen Anforderung angefordert werden können;
eine zweite Regel, die eine zweite Teilmenge von Konfigurationen identifiziert, die von der UE in nachfolgenden Anforderungen angefordert werden können;
wobei optional:
die erste Teilmenge von Konfigurationen eine erste Konfiguration umfasst, die die geringste Energie zum Senden von PRS benötigt; und
die zweite Teilmenge mindestens eine Konfiguration umfasst, die mehr Energie zum Senden von PRS als die erste Konfiguration benötigt; und
wobei ferner optional:
{i} die Auswahlregeln einen Schwellenwert einer Positionsbestimmungsdienstqualität, Positionsbestimmungs-QoS, zur Auswahl zwischen der ersten Konfiguration und Konfigurationen der zweiten Teilmenge umfassen; und
wobei der Schwellenwert der Positionsbestimmungs-QoS mit einem oder mehreren von Folgenden in Beziehung steht: Genauigkeit und Latenz; oder
{ii} die zweite Teilmenge eine zweite Konfiguration, die mehr Energie als die erste Konfiguration benötigt, und eine dritte Konfiguration umfasst, die mehr Energie als die zweite Konfiguration benötigt;
die eine oder die mehreren nachfolgenden Anforderungen eine erste nachfolgende und eine zweite nachfolgende Anforderung nach der ersten nachfolgenden Anforderung umfassen; und
die zweite Regel identifiziert, dass die zweite Konfiguration für die erste nachfolgende Anforderung ausgewählt werden kann und dass die dritte Konfiguration für die zweite nachfolgende Anforderung ausgewählt werden kann.

13. Verfahren nach einem der Ansprüche 7-12, wobei das Bestimmen (1410) der Mehrzahl von Konfigurationen Folgendes umfasst:
Erhalten (1411) einer Standardkonfiguration zur PRS-Übertragung; und
Bestimmen (1412) der Mehrzahl von Konfigurationen basierend auf Folgenden:
Messungen, die von UEs an PRS vorgenommen werden, die gemäß den Standardkonfigurationen übertragen wurden;
Fähigkeiten der Knoten;
Anzahlen von UEs, die in dem RAN operieren; und
einem oder mehreren Unterscheidungsmerkmalen oder Parametern; und
wobei optional das Bestimmen (1410) der Mehrzahl von Konfigurationen Anpassen (1413) der Mehrzahl von Konfigurationen basierend auf einem oder mehreren von Folgenden umfasst:
Messungen, die von UEs an PRS vorgenommen werden, die gemäß der Mehrzahl von Konfigurationen übertragen wurden;
aktualisierten Fähigkeiten der Knoten;
aktualisierten Anzahlen von UEs, die in dem RAN operieren; und
dem einen oder den mehreren Unterscheidungsmerkmalen oder Parametern.

14. Verfahren für einen Funkzugangsnetzwerkknoten, RAN-Knoten, wobei das Verfahren Folgendes umfasst:
Empfangen (1510) von Folgenden von einem Positionsbestimmungsknoten, der mit dem RAN assoziiert ist:
eine Mehrzahl von Konfiguration für Positionsbestimmungsreferenzsignal, PRS, und
eine entsprechende Mehrzahl von Konfigurationsindizes, die mit der Mehrzahl von Konfigurationen assoziiert ist;
anschließendes Empfangen (1530) einer oder mehrerer Anforderungen zur PRS-Übertragung von dem Positionsbestimmungsknoten, wobei die eine oder die mehreren Anforderungen einen oder mehrere der Mehrzahl von Konfigurationsindizes umfassen; und
Übertragen (1540) von PRS gemäß einer oder mehreren der Konfigurationen, die mit dem einen oder den mehreren Konfigurationsindizes assoziiert sind, die in der einen oder den mehreren Anforderungen umfasst sind;
wobei die eine oder die mehreren Anforderungen eine anfängliche Anforderung und eine oder mehrere nachfolgende Anforderungen umfassen und die Konfigurationen Folgendes umfassen:
eine erste Teilmenge von Konfigurationen, die von einer UE in der anfänglichen Anforderung angefordert werden können;
eine zweite Teilmenge von Konfigurationen, die von der UE in den nachfolgenden Anforderungen angefordert werden können.

15. Verfahren nach Anspruch 14, wobei die Mehrzahl von Konfigurationen basierend auf einem oder mehreren der folgenden Merkmalen oder Parameter voneinander unterschieden wird:
PRS-Übertragungsperiodizität;
PRS-Übertragungsbandbreite;
Anzahl der PRS-Übertragungsfrequenzschichten, die verwendet werden;
spezifische PRS-Übertragungsfrequenzschichten, die verwendet werden;
Anzahl von RAN-Knoten, die PRS übertragen;
spezifische RAN-Knoten, die PRS übertragen;
geografische Anordnung von RAN-Knoten, die PRS senden;
Anzahl von PRS-Ressourcensätzen pro Knoten;
Anzahl von PRS pro PRS-Ressourcensatz;
Energieverbrauch und/oder Signalisierungsaufwand, der mit dem Übertragen von PRS gemäß der Konfiguration assoziiert ist;
relevantes geografisches Gebiet;
räumliche Dimension der Positionsbestimmung;
Dienstqualität, QoS, der Positionsbestimmungsgenauigkeit; und
QoS der Positionsbestimmungslatenz.

16. Verfahren nach einem der Ansprüche 14-15, wobei die Mehrzahl von Konfigurationen folgende umfasst:
eine erste Konfiguration, die Standardwerte für Konfigurationsparameter umfasst; und
eine oder mehrere weitere Konfigurationen, wobei jede weitere Konfigurationen nur diejenigen der Konfigurationsparameter umfasst, die andere Werte als die Standardwerte aufweisen; und optional wobei:
das Verfahren ferner Rundsenden (1520) der ersten Konfiguration in einem ersten Systeminformationsblock, SIB, und der einen oder der mehreren weiteren Konfigurationen in einem zweiten SIB umfasst; und
der erste SIB angibt, dass die erste Konfiguration eine von folgenden ist: eine Standardkonfiguration oder eine gegenwärtig aktive Konfiguration.

17. Verfahren nach Anspruch 14, wobei:
die erste Teilmenge von Konfigurationen eine erste Konfiguration umfasst, die die geringste Energie zum Übertragen von PRS benötigt; und
die zweite Teilmenge mindestens eine Konfiguration umfasst, die mehr Energie zum Senden von PRS als die erste Konfiguration benötigt;
und wobei optional:
die zweite Teilmenge eine zweite Konfiguration, die mehr Energie als die erste Konfiguration benötigt, und
eine dritte Konfiguration umfasst, die mehr Energie als die zweite Konfiguration benötigt;

18. Benutzereinrichtung, UE (205, 310, 410, 1612, 1700, 2106), die zur Positionsbestimmung in einem Funkzugangsnetzwerk, RAN, (199, 299, 420, 1604) konfiguriert ist, wobei die UE Folgendes umfasst:
Kommunikationsschnittstellen-Schaltungsanordnung (1710), die zum Kommunizieren mit RAN-Knoten (100, 210, 220, 421, 422, 610, 1210, 1610, 1800, 2002, 2104) und mit einem Positionsbestimmungsknoten (440, 450, 460, 1220, 1800, 2002) konfiguriert ist, die mit dem RAN assoziiert sind; und
Verarbeitungsschaltungsanordnung (1702), die funktionell mit der Kommunikationsschnittstellen-Schaltungsanordnung gekoppelt ist,
wobei die Verarbeitungsschaltungsanordnung und die Kommunikationsschnittstellen-Schaltungsanordnung ferner zum Durchführen des Verfahrens nach einem der Ansprüche 1-6 konfiguriert sind.

19. Positionsbestimmungsknoten (440, 450, 460, 1220, 1800, 2002), der für Betrieb mit einem Funkzugangsnetzwerk, RAN, (199, 299, 420, 1604) konfiguriert ist, wobei der Positionsbestimmungsknoten Folgendes umfasst:
Kommunikationsschnittstellen-Schaltungsanordnung (441, 451, 461, 1806, 2004), die zum Kommunizieren mit RAN-Knoten (100, 210, 220, 421, 422, 610, 1210, 1610, 1800, 2002, 2104) und mit einer Benutzereinrichtung, UE, (205, 310, 410, 1612, 1700, 2106) konfiguriert ist, die in dem RAN operieren; und
Verarbeitungsschaltungsanordnung (442, 452, 462, 1802, 2004), die funktionell mit der Kommunikationsschnittstellen-Schaltungsanordnung gekoppelt ist,
wobei die Verarbeitungsschaltungsanordnung und die Kommunikationsschnittstellen-Schaltungsanordnung ferner zum Durchführen des Verfahrens nach einem der Ansprüche 7-13 konfiguriert sind.

20. Funkzugangsnetzwerkknoten, RAN-Knoten, (100, 210, 220, 421, 422, 610, 1210, 1610, 1800, 2002, 2104), umfassend:
Kommunikationsschnittstellen-Schaltungsanordnung (1806, 2004), die zum Kommunizieren mit einer Benutzereinrichtung, UE, (205, 310, 410, 1612, 1700, 2106) und mit einem Positionsbestimmungsknoten (440, 450, 460, 1220, 1800, 2002) konfiguriert ist, die mit dem RAN assoziiert sind; und
Verarbeitungsschaltungsanordnung (1802, 2004), die funktionell mit der Kommunikationsschnittstelle-Schaltungsanordnung gekoppelt ist,
wobei die Verarbeitungsschaltungsanordnung und die Kommunikationsschnittstellen-Schaltungsanordnung ferner zum Durchführen des Verfahrens nach einem der Ansprüche 14-17 konfiguriert sind.

## Revendications

1. Procédé pour un équipement utilisateur, UE, configuré pour son positionnement dans un réseau d'accès radio, RAN, le procédé comprenant :
la réception (1310) de ce qui suit depuis un nœud de positionnement associé au RAN :
une pluralité de configurations pour des signaux de référence de positionnement, PRS, transmis par le RAN, et
une pluralité correspondante d'indices de configuration associés à la pluralité de configurations ;
la détermination (1340) d'un besoin de réception de PRS et la sélection d'une ou plusieurs parmi la pluralité de configurations sur la base d'une ou plusieurs règles de sélection ; et
la transmission (1350), au nœud de positionnement, d'une ou plusieurs demandes de transmission de PRS par le RAN, dans lequel les une ou plusieurs demandes incluent les un ou plusieurs indices de configuration qui sont associés aux une ou plusieurs configurations sélectionnées, et dans lequel les règles de sélection incluent un ordre séquentiel dans lequel les configurations respectives peuvent être demandées par l'UE.

2. Procédé selon la revendication 1, dans lequel la pluralité de configurations sont différenciées les unes des autres sur la base d'un ou plusieurs parmi les caractéristiques ou paramètres suivants :
une périodicité de transmission de PRS ;
une bande passante de transmission de PRS ;
un nombre de couches de fréquence de transmission de PRS utilisées ;
des couches de fréquence de transmission de PRS particulières utilisées ;
un nombre de nœuds RAN qui transmettent des PRS ;
des nœuds RAN particuliers qui transmettent des PRS ;
un agencement géographique de nœuds RAN qui transmettent des PRS ;
un nombre d'ensembles de ressources de PRS par nœud ;
un nombre de PRS par ensemble de ressources de PRS ;
une consommation d'énergie et/ou une charge de signalisation associées à la transmission de PRS selon la configuration ;
une zone géographique pertinente ;
une dimension spatiale de positionnement ;
une qualité de service, QoS, de précision de positionnement ; et
une QoS de latence de positionnement ; et facultativement
le procédé comprenant en outre la réception (1320), depuis le nœud de positionnement, d'une indication des caractéristiques ou paramètres par lesquels la pluralité de configurations sont différenciées, dans lequel la sélection d'une ou plusieurs parmi la pluralité de configurations est basée sur les caractéristiques ou paramètres indiqués.

3. Procédé selon la revendication 1 ou 2, dans lequel la pluralité de configurations inclut :
une première configuration qui inclut des valeurs par défaut pour des paramètres de configuration ; et
une ou plusieurs autres configurations, chaque autre configuration incluant uniquement ceux des paramètres de configuration qui présentent des valeurs différentes des valeurs par défaut ; et facultativement
dans lequel :
la première configuration est reçue via un premier bloc d'informations système, SIB, de diffusion ;
les une ou plusieurs autres configurations sont reçues via un deuxième SIB de diffusion ; et
le premier SIB indique que la première configuration est l'une parmi : une configuration par défaut ou une configuration couramment active.

4. Procédé selon l'une quelconque des revendications 1 à 3, dans lequel chaque demande inclut un indice associé à une configuration sélectionnée, et dans lequel les une ou plusieurs demandes incluent une demande initiale et une ou plusieurs demandes ultérieures, et les règles de sélection incluent :
une première règle identifiant un premier sous-ensemble de configurations qui peuvent être demandées par l'UE dans la demande initiale ; et
une deuxième règle identifiant un deuxième sous-ensemble de configurations qui peuvent être demandées par l'UE dans les demandes ultérieures, facultativement
dans lequel :
le premier sous-ensemble de configurations inclut une première configuration qui nécessite une énergie la plus basse pour transmettre des PRS ; et
le deuxième sous-ensemble inclut au moins une configuration qui nécessite plus d'énergie pour transmettre des PRS que la première configuration ; et
dans lequel en outre facultativement
{i} la sélection (1340) d'une ou plusieurs parmi la pluralité de configurations sur la base d'une ou plusieurs règles de sélection comprend :
la détermination (1341) si un positionnement basé sur des transmissions de PRS selon la première configuration satisfera à un seuil de qualité de service, QoS, de positionnement ;
la sélection (1342) de la première configuration lorsqu'il est déterminé que le seuil de QoS de positionnement sera satisfait ; et
la sélection (1341) d'une configuration du deuxième sous-ensemble lorsqu'il est déterminé que le seuil de QoS de positionnement ne sera pas satisfait,
dans lequel le seuil de QoS de positionnement est lié à une ou plusieurs parmi : une précision et une latence ; ou
{ii} le deuxième sous-ensemble inclut une deuxième configuration qui nécessite plus d'énergie que la première configuration et une troisième configuration qui nécessite plus d'énergie que la deuxième configuration ;
les une ou plusieurs demandes ultérieures incluent une première demande ultérieure et une deuxième demande ultérieure après la première demande ultérieure ; et
la deuxième règle identifie que la deuxième configuration peut être sélectionnée pour la première demande ultérieure et que la troisième configuration peut être sélectionnée pour la deuxième demande ultérieure.

5. Procédé selon l'une quelconque des revendications 1 à 3, dans lequel :
les une ou plusieurs demandes incluent une demande unique qui inclut au moins deux indices de configuration ; et
les règles de sélection incluent une troisième règle indiquant l'un de plusieurs paramètres de configuration qui doit être commun aux au moins deux configurations associées aux au moins deux indices de configuration inclus dans la demande unique.

6. Procédé selon la revendication 5, dans lequel la troisième règle indique qu'au moins les paramètres suivants doivent être communs aux au moins configurations sélectionnées : une périodicité de transmission de PRS, et des nœuds RAN particuliers qui transmettent des PRS ; et/ou le procédé comprenant en outre la réalisation (1360) de mesures de positionnement sur des PRS transmis de manière cohérente selon les au moins deux configurations associées aux au moins deux indices de configuration inclus dans la demande unique.

7. Procédé pour un nœud de positionnement associé à un réseau d'accès radio, RAN, le procédé comprenant :
la détermination (1410) d'une pluralité de configurations pour des signaux de référence de positionnement, PRS, transmis par des nœuds RAN, dans lequel la pluralité de configurations sont associées à une pluralité correspondante d'indices de configuration ;
l'envoi (1420), aux nœuds RAN et à un équipement utilisateur, UE, fonctionnant dans le RAN, de la pluralité de configurations et de la pluralité associée d'indices de configuration ; et
la réception (1450), depuis l'UE, d'une ou plusieurs demandes de transmission de PRS par le RAN, dans lequel les une ou plusieurs demandes incluent les un ou plusieurs parmi la pluralité d'indices de configuration qui sont associés à une ou plusieurs parmi la pluralité de configurations qui ont été sélectionnées par l'UE sur la base d'une ou plusieurs règles de sélection, dans lequel les règles de sélection incluent un ordre séquentiel dans lequel les configurations respectives peuvent être demandées par l'UE.

8. Procédé selon la revendication 7, dans lequel la pluralité de configurations sont différenciées les unes des autres sur la base d'un ou plusieurs parmi les caractéristiques ou paramètres suivants :
une périodicité de transmission de PRS ;
une bande passante de transmission de PRS ;
un nombre de couches de fréquence de transmission de PRS utilisées ;
des couches de fréquence de transmission de PRS particulières utilisées ;
un nombre de nœuds RAN qui transmettent des PRS ;
des nœuds RAN particuliers qui transmettent des PRS ;
un agencement géographique de nœuds RAN qui transmettent des PRS ;
un nombre d'ensembles de ressources de PRS par nœud ;
un nombre de PRS par ensemble de ressources de PRS ;
une consommation d'énergie et/ou une charge de signalisation associées à la transmission de PRS selon la configuration ;
une zone géographique pertinente ;
une dimension spatiale de positionnement ;
une qualité de service, QoS, de précision de positionnement ; et
une QoS de latence de positionnement ; et facultativement
le procédé comprenant en outre l'envoi (1430), à l'UE, d'une indication des caractéristiques ou paramètres par lesquels la pluralité de configurations sont différenciées.

9. Procédé selon l'une quelconque des revendications 7 et 8, dans lequel la pluralité de configurations inclut :
une première configuration qui inclut des valeurs par défaut pour des paramètres de configuration ; et
une ou plusieurs autres configurations, chaque autre configuration incluant uniquement ceux des paramètres de configuration qui présentent des valeurs différentes des valeurs par défaut ; et facultativement
dans lequel :
la première configuration est envoyée par diffusion d'un premier bloc d'informations système, SIB, par le RAN ; et
les une ou plusieurs autres configurations sont envoyées par diffusion d'un deuxième SIB par le RAN ; et
le premier SIB indique que la première configuration est l'une parmi : une configuration par défaut ou une configuration couramment active.

10. Procédé selon l'une quelconque des revendications 7 à 9, comprenant en outre la configuration (1460) des nœuds RAN pour transmettre des PRS selon l'une parmi : les une ou plusieurs configurations sélectionnées par l'UE, ou les une ou plusieurs autres configurations sélectionnées par le nœud de positionnement.

11. Procédé selon la revendication 10, comprenant en outre l'envoi (1440), à l'UE, de règles de sélection pour sélectionner parmi la pluralité de configurations, facultativement dans lequel chaque demande inclut un indice associé à une configuration sélectionnée par l'UE.

12. Procédé selon la revendication 11, dans lequel les une ou plusieurs demandes incluent une demande initiale et une ou plusieurs demandes ultérieures, et les règles de sélection incluent :
une première règle identifiant un premier sous-ensemble de configurations qui peuvent être demandées par l'UE dans la demande initiale ; et
une deuxième règle identifiant un deuxième sous-ensemble de configurations qui peuvent être demandées par l'UE dans les demandes ultérieures, facultativement
dans lequel :
le premier sous-ensemble inclut une première configuration qui nécessite une énergie la plus basse pour transmettre des PRS ; et
le deuxième sous-ensemble inclut au moins une configuration qui nécessite plus d'énergie pour transmettre des PRS que la première configuration, et
dans lequel en outre facultativement :
{i} les règles de sélection incluent un seuil de qualité de service, QoS, de positionnement pour une sélection entre la première configuration et des configurations du deuxième sous-ensemble ; et le seuil de QoS le positionnement est lié à une ou plusieurs parmi : une précision et une latence ; ou
{ii} le deuxième sous-ensemble inclut une deuxième configuration qui nécessite plus d'énergie que la première configuration et une troisième configuration qui nécessite plus d'énergie que la deuxième configuration ;
les une ou plusieurs demandes ultérieures incluent une première demande ultérieure et une deuxième demande ultérieure après la première demande ultérieure ; et
la deuxième règle identifie que la deuxième configuration peut être sélectionnée pour la première demande ultérieure et que la troisième configuration peut être sélectionnée pour la deuxième demande ultérieure.

13. Procédé selon l'une quelconque des revendications 7 à 12, dans lequel la détermination (1410) de la pluralité de configurations comprend :
l'obtention (1411) d'une configuration par défaut pour une transmission de PRS ; et
la détermination (1412) de la pluralité de configurations sur la base de ce qui suit :
des mesures effectuées par des UE sur des PRS transmis selon la configuration par défaut ;
des capacités des nœuds ;
des nombres d'UE fonctionnant dans le RAN ; et
un ou plusieurs caractéristiques ou paramètres de différenciation ; et
dans lequel, facultativement, la détermination (1410) de la pluralité de configurations comprend l'adaptation (1413) de la pluralité de configurations sur la base d'un ou plusieurs parmi :
des mesures effectuées par des UE sur des PRS transmis selon la pluralité de configurations ;
des capacités mises à jour des nœuds ;
des nombres mis à jour d'UE fonctionnant dans le RAN ; et
les un ou plusieurs caractéristiques ou paramètres de différenciation.

14. Procédé pour un nœud de réseau d'accès radio, RAN, le procédé comprenant :
la réception (1510) de ce qui suit depuis un nœud de positionnement associé au RAN :
une pluralité de configurations pour des transmissions de signaux de référence de positionnement, PRS, et
une pluralité correspondante d'indices de configuration associés à la pluralité de configurations ;
la réception ultérieure (1530), depuis le nœud de positionnement, d'une ou plusieurs demandes de transmission de PRS, dans lequel les une ou plusieurs demandes incluent un ou plusieurs parmi la pluralité d'indices de configuration ; et
la transmission (1540) de PRS selon une ou plusieurs parmi les configurations associées aux un ou plusieurs indices de configuration inclus dans les une ou plusieurs demandes ;
dans lequel les une ou plusieurs demandes incluent une demande initiale et une ou plusieurs demandes ultérieures, et les configurations incluent :
un premier sous-ensemble de configurations qui peuvent être demandées par un UE dans la demande initiale ; et un deuxième sous-ensemble de configurations qui peuvent être demandées par l'UE dans les demandes ultérieures.

15. Procédé selon la revendication 14, dans lequel la pluralité de configurations sont différenciées les unes des autres sur la base d'un ou plusieurs parmi les caractéristiques ou paramètres suivants :
une périodicité de transmission de PRS ;
une bande passante de transmission de PRS ;
un nombre de couches de fréquence de transmission de PRS utilisées ;
des couches de fréquence de transmission de PRS particulières utilisées ;
un nombre de nœuds RAN qui transmettent des PRS ;
des nœuds RAN particuliers qui transmettent des PRS ;
un agencement géographique de nœuds RAN qui transmettent des PRS ;
un nombre d'ensembles de ressources de PRS par nœud ;
un nombre de PRS par ensemble de ressources de PRS ;
une consommation d'énergie et/ou une charge de signalisation associées à la transmission de PRS selon la configuration ;
une zone géographique pertinente ;
une dimension spatiale de positionnement ;
une qualité de service, QoS, de précision de positionnement ; et
une QoS de latence de positionnement.

16. Procédé selon l'une quelconque des revendications 14 et 15, dans lequel la pluralité de configurations inclut :
une première configuration qui inclut des valeurs par défaut pour des paramètres de configuration ; et
une ou plusieurs autres configurations, chaque autre configuration incluant uniquement ceux des paramètres de configuration qui présentent des valeurs différentes des valeurs par défaut ; et facultativement
dans lequel :
le procédé comprend en outre la diffusion (1520) de la première configuration dans un premier bloc d'informations système, SIB, et des une ou plusieurs autres configurations dans un deuxième SIB ; et
le premier SIB indique que la première configuration est l'une parmi : une configuration par défaut ou une configuration couramment active.

17. Procédé selon la revendication 14, dans lequel :
le premier sous-ensemble de configurations inclut une première configuration qui nécessite une énergie la plus basse pour transmettre des PRS ; et
le deuxième sous-ensemble inclut au moins une configuration qui nécessite plus d'énergie pour transmettre des PRS que la première configuration ;
et facultativement dans lequel :
le deuxième sous-ensemble inclut une deuxième configuration qui nécessite plus énergie que la première configuration et une troisième configuration qui nécessite plus d'énergie que la deuxième configuration.

18. Equipement utilisateur, UE, (205, 310, 410, 1612, 1700, 2106) configuré pour son positionnement dans un réseau d'accès radio, RAN, (199, 299, 420, 1604), l'UE comprenant :
une circuiterie d'interface de communication (1710) configurée pour communiquer avec des nœuds RAN (100, 210, 220, 421, 422, 610, 1210, 1610, 1800, 2002, 2104) et avec un nœud de positionnement (440, 450, 460, 1220, 1800, 2002) associé au RAN ; et
une circuiterie de traitement (1702) couplée fonctionnellement à la circuiterie d'interface de communication,
dans lequel la circuiterie de traitement et la circuiterie d'interface de communication sont en outre configurées pour réaliser le procédé selon l'une quelconque des revendications 1 à 6.

19. Nœud de positionnement (440, 450, 460, 1220, 1800, 2002) configuré pour fonctionner avec un réseau d'accès radio, RAN, (199, 299, 420, 1604), le nœud de positionnement comprenant :
une circuiterie d'interface de communication (441, 451, 461, 1806, 2004) configurée pour communiquer avec des nœuds RAN (100, 210, 220, 421, 422, 610, 1210, 1610, 1800, 2002, 2104) et avec un équipement utilisateur, UE, (205, 310, 410, 1612, 1700, 2106) fonctionnant dans le RAN ; et
une circuiterie de traitement (442, 452, 462, 1802, 2004) couplée fonctionnellement à la circuiterie d'interface de communication,
dans lequel la circuiterie de traitement et la circuiterie d'interface de communication sont en outre configurées pour réaliser le procédé selon l'une quelconque des revendications 7 à 13.

20. Nœud de réseau d'accès radio, RAN, (100, 210, 220, 421, 422, 610, 1210, 1610, 1800, 2002, 2104) comprenant :
une circuiterie d'interface de communication (1806, 2004) configurée pour communiquer avec des équipements utilisateur, UE, (205, 310, 410, 1612, 1700, 2106) et avec un nœud de positionnement (440, 450, 460, 1220, 1800, 2002) associé au RAN ; et
une circuiterie de traitement (1802, 2004) couplée fonctionnellement à la circuiterie d'interface de communication,
dans lequel la circuiterie de traitement et la circuiterie d'interface de communication sont en outre configurées pour réaliser le procédé selon l'une quelconque des revendications 14 à 17.
